# EUROPEAN PATENT APPLICATION

(11) **EP 4 835 605 A1**
(43) Date of publication of application: **04.11.2026**
(21) Application number: 24912175.7
(22) Date of filing: 27.11.2024
(51) Int. Cl.: G05D 23/00, F24H 4/02, G05D 23/19

(54) **TEMPERATURE CONTROL DEVICE, TEMPERATURE CONTROL PROGRAM, AND TEMPERATURE CONTROL METHOD**

(30) Priority: 25.12.2023 JP 2023218677
(71) Applicant: DENSO CORPORATION, Kariya-city, Aichi 448-8661 (JP)
(72) Inventor: WASHIO, Sho, Nisshin-city, Aichi 4700111 (JP); OMATA, Ryuji, Kariya- city, Aichi 4488661 (JP); NUMATA, Masanari, Kariya- city, Aichi 4488661 (JP)
(74) Representative: TBK
(86) International application number: PCT/JP2024/041955
(87) International publication number: WO 2025/142285

(57) **Abstract**

A temperature adjustment system (100) includes a first circulation circuit (11) configured such that a flow path of a first heat transfer medium is changeable, and a heat pump (130) including a pressure converter (33, 34) that compresses or expands a second heat transfer medium during circulation of the second heat transfer medium to change a temperature of the second heat transfer medium, and a temperature control apparatus (140). In the temperature adjustment system, the first heat transfer medium flowing from the first circulation circuit into the first heat exchanger exchanges heat with the second heat transfer medium, so that a temperature of the first heat transfer medium is adjusted. The temperature control apparatus includes a temperature prediction unit (142) and a flow path control unit (144). The temperature prediction unit calculates, when change of the flow path of the first heat transfer medium is determined, a predicted temperature or a predicted temperature change rate of the first heat transfer medium flowing into the first heat exchanger. The flow path control unit controls, based on the predicted temperature or the predicted temperature change rate of the first heat transfer medium, the change of the flow path of the first heat transfer medium.

## Description

### CROSS-REFERENCE TO RELATED APPLICATION

The present application is based on and claims the benefit of priority from Japanese Patent Application No. 2023-218677 filed on December 25, 2023, the disclosure of which is incorporated herein by reference.

### TECHNICAL FIELD

The present disclosure relates to an apparatus, a method, and a program product for temperature control.

### BACKGROUND

A conventional temperature adjustment system, which is disclosed in Patent Literature 1, switches between flow paths, through which a refrigerant flows, coupled to target devices to thereby adjust the temperatures of the target devices, such as cool or heat the target devices.

### CROSS-REFERENCES

Patent Literature 1 Japanese Patent Publication No. 5983187

### SUMMARY

In such a temperature adjustment system, it has been proposed to utilize a heat pump to transfer heat between a low-temperature water circuit and a high-temperature water circuit.

However, if a flow path is switched in either the low-temperature water circuit or the high-temperature water circuit, the temperature of a heat transfer medium flowing through the circuit in which the flow path is switched may change abruptly. This change may exceed the capacity of the heat pump, potentially affecting the heat transfer medium flowing through the other circuit. For example, if the temperature of the heat transfer medium in the low-temperature water circuit drops sharply due to a flow path switch, and the temperature of a refrigerant in the heat pump consequently drops beyond the capacity of the temperature adjustment function of the heat pump, the temperature of the heat transfer medium flowing in the high-temperature water circuit may decrease. In this case, for instance, the temperature of a heater connected to the high-temperature water circuit may drop.

In view of the above circumstances, the present disclosure seeks to provide temperature control apparatuses, temperature control methods, and temperature control program products, each of which is capable of preventing abrupt temperature changes in a heat transfer medium.

A first aspect of the present disclosure provides a temperature control apparatus for a temperature adjustment system. The temperature adjustment system includes a first circulation circuit through which a first heat transfer medium circulates, the first circulation circuit being configured such that a flow path of the first heat transfer medium is changeable. The temperature adjustment system includes a heat pump configured to circulate a second heat transfer medium between a first heat exchanger and a second heat exchanger. The heat pump includes a pressure converter configured to compress or expand the second heat transfer medium during circulation of the second heat transfer medium to change a temperature of the second heat transfer medium. The first heat transfer medium flows from the first circulation circuit into the first heat exchanger exchanging heat with the second heat transfer medium, so that a temperature of the first heat transfer medium is adjusted.

The temperature control apparatus includes a temperature prediction unit configured to calculate, when change of the flow path of the first heat transfer medium is determined, a predicted temperature or a predicted temperature change rate of the first heat transfer medium flowing into the first heat exchanger. The temperature control apparatus includes a flow path control unit configured to control, based on the predicted temperature or the predicted temperature change rate of the first heat transfer medium, the change of the flow path of the first heat transfer medium.

The temperature control apparatus of the first aspect calculates, when change of the flow path of the first heat transfer medium is determined, the predicted temperature or the predicted temperature change rate of the first heat transfer medium flowing into the first heat exchanger, and controls, based on the predicted temperature or the predicted temperature change rate of the first heat transfer medium, the change of the flow path of the first heat transfer medium. This therefore makes it possible to prevent abrupt temperature changes in the first heat transfer medium.

A second aspect of the present disclosure provides a temperature control program executable by a temperature control apparatus for a temperature adjustment system. The temperature adjustment system includes a first circulation circuit through which a first heat transfer medium circulates, the first circulation circuit being configured such that a flow path of the first heat transfer medium is changeable. The temperature adjustment system includes a heat pump configured to circulate a second heat transfer medium between a first heat exchanger and a second heat exchanger. The heat pump includes a pressure converter configured to compress or expand the second heat transfer medium during circulation of the second heat transfer medium to change a temperature of the second heat transfer medium. The first heat transfer medium flows from the first circulation circuit into the first heat exchanger exchanging heat with the second heat transfer medium, so that a temperature of the first heat transfer medium is adjusted.

The temperature control program causes the temperature control apparatus to (i) calculate, when change of the flow path of the first heat transfer medium is determined, a predicted temperature or a predicted temperature change rate of the first heat transfer medium flowing into the first heat exchanger, and (ii) control, based on the predicted temperature or the predicted temperature change rate of the first heat transfer medium, the change of the flow path of the first heat transfer medium.

The temperature control program of the second aspect causes the temperature control apparatus to (i) calculate, when change of the flow path of the first heat transfer medium is determined, the predicted temperature or the predicted temperature change rate of the first heat transfer medium flowing into the first heat exchanger, and (ii) control, based on the predicted temperature or the predicted temperature change rate of the first heat transfer medium, the change of the flow path of the first heat transfer medium. This therefore makes it possible to prevent abrupt temperature changes in the first heat transfer medium.

A third aspect of the present disclosure provides a temperature control method for a temperature adjustment system. The temperature adjustment system includes a first circulation circuit through which a first heat transfer medium circulates, the first circulation circuit being configured such that a flow path of the first heat transfer medium is changeable. The temperature adjustment system includes a heat pump configured to circulate a second heat transfer medium between a first heat exchanger and a second heat exchanger. The heat pump includes a pressure converter configured to compress or expand the second heat transfer medium during circulation of the second heat transfer medium to change a temperature of the second heat transfer medium. The first heat transfer medium flows from the first circulation circuit into the first heat exchanger exchanging heat with the second heat transfer medium, so that a temperature of the first heat transfer medium is adjusted.

The temperature control method includes (i) calculating, when change of the flow path of the first heat transfer medium is determined, a predicted temperature or a predicted temperature change rate of the first heat transfer medium flowing into the first heat exchanger, and (ii) controlling, based on the predicted temperature or the predicted temperature change rate of the first heat transfer medium, the change of the flow path of the first heat transfer medium.

The temperature control method of the third aspect calculates, when change of the flow path of the first heat transfer medium is determined, the predicted temperature or the predicted temperature change rate of the first heat transfer medium flowing into the first heat exchanger, and controls, based on the predicted temperature or the predicted temperature change rate of the first heat transfer medium, the change of the flow path of the first heat transfer medium. This therefore makes it possible to prevent abrupt temperature changes in the first heat transfer medium.

### BRIEF DESCRIPTION OF THE DRAWINGS

Other aspects of the present disclosure will become apparent from the following description of embodiments with reference to the accompanying drawings in which:
Fig. 1 is a block diagram illustrating a temperature adjustment system according to the first embodiment;
Fig. 2 is a graph illustrating how a function f(X, Xmin, Xmax) varies;
Fig. 3 is a flowchart illustrating a flow path control routine according to the first embodiment;
Fig. 4 is a block diagram illustrating a temperature adjustment system according to the second embodiment, which illustrates functions of an ECU of the system;
Fig. 5 is a flowchart illustrating an instruction routine according to the second embodiment;
Fig. 6 is a block diagram illustrating a temperature adjustment system according to the third embodiment;
Fig. 7 is a flowchart illustrating a flow path control routine according to the third embodiment;
Fig. 8 is a flowchart illustrating a flow path control routine according to the fourth embodiment;
Fig. 9 is a block diagram illustrating a temperature adjustment system according to a modification; and
Fig. 10 is a block diagram illustrating a temperature adjustment system according to an alternative modification.

### DETAILED DESCRIPTION OF EMBODIMENTS

The following describes embodiments of a temperature control apparatus, a temperature control program product, and a temperature control method according to the present disclosure with reference to the accompanying drawings. In each embodiment, the temperature control apparatus, the temperature control program product, and the temperature control method are applied to a vehicle, such as an electric vehicle, a hybrid vehicle, and other types of vehicle. In the following embodiments, the same or equivalent parts are represented by the same reference characters in the drawings.

### First Embodiment

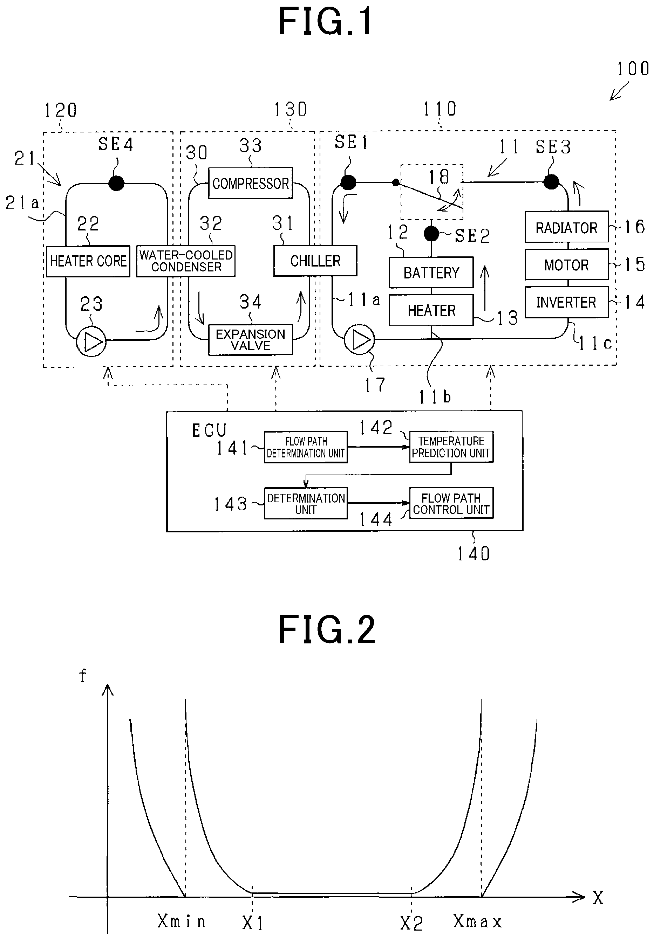

As shown in FIG. 1, a temperature adjustment system 100 includes a low-temperature circuit portion 110, a high-temperature circuit portion 120, a heat pump 130 disposed between the low-temperature circuit portion 110 and the high-temperature circuit portion 120, and an ECU 140 as a temperature control apparatus that controls the overall operation of the temperature adjustment system 100.

The low-temperature circuit portion 110 includes a first circulation circuit 11 through which a first heat transfer medium, which is a refrigerant (coolant) such as low-temperature cooling water, circulates. The low-temperature circuit portion 110 is configured to cool target components selected from the components mounted to the vehicle. Examples of the cooling target components include a chargeable and dischargeable storage battery 12, a battery heater 13, an inverter 14, a motor 15, and a radiator 16.

In the first circulation circuit 11 of the low-temperature circuit portion 110, a first pump 17 for circulating the first heat transfer medium and a chiller 31 as a first heat exchanger constituting the heat pump 130 are disposed. The first circulation circuit 11 of the first embodiment includes a first flow path 11a in which the chiller 31 and the first pump 17 are arranged in series. A second flow path 11b in which the battery heater 13 and the storage battery 12 are arranged in series, and a third flow path 11c in which the inverter 14, the motor 15, and the radiator 16 are arranged in series, are disposed in parallel to the first flow path 11a. That is, the first flow path 11a branches into the second flow path 11b and the third flow path 11c.

In the second flow path 11b and the third flow path 11c of the present embodiment, a side closer to the discharge side (outflow side) of the first pump 17 is defined as an upstream side, and a side closer to the suction side (inflow side) of the first pump 17 is defined as a downstream side. In Fig. 1, arrows in each flow path indicate the direction from the upstream side toward the downstream side.

On the downstream side of the second flow path 11b and the third flow path 11c, a switching valve 18 as a flow path changing device is provided at a point (connection point) where the second flow path 11b and the third flow path 11c merge. The switching valve 18 is controlled to selectively connect either the second flow path 11b or the third flow path 11c to the first flow path 11a. In the present embodiment, a state in which the switching valve 18 is switched to the second flow path 11b - that is, a state in which the second flow path 11b is connected to the first flow path 11a - is referred to as a "second flow path switching state". Similarly, a state in which the switching valve 18 is switched to the third flow path 11c - that is, a state in which the third flow path 11c is connected to the first flow path 11a - is referred to as a "third flow path switching state".

The first circulation circuit 11 is configured to be switchable between the second flow path switching state and the third flow path switching state. Components such as the battery heater 13 and the inverter 14, and the switching valve 18 are connected to the ECU 140 and controlled by the ECU 140.

The high-temperature circuit portion 120 includes a second circulation circuit 21 through which a third heat transfer medium circulates. The third heat transfer medium has a higher temperature than the first heat transfer medium of the low-temperature circuit portion 110. The high-temperature circuit portion 120 is configured to heat (or cool) one or more target components selected from the components mounted to the vehicle 10. The third heat transfer medium is, for example, cooling water (coolant) or a refrigerant gas. Examples of the one or more target components include a heater core 22 constituting an air conditioner (not shown). The heater core 22 is connected to the ECU 140 and controlled by the ECU 140.

In the second circulation circuit 21 of the high-temperature circuit portion 120, a flow path 21a through which the third heat transfer medium flows, a second pump 23 for circulating the third heat transfer medium in the flow path 21a, and a water-cooled condenser 32 as a second heat exchanger constituting the heat pump 130 are disposed. The third heat transfer medium is configured to be circulated between the heater core 22 and the water-cooled condenser 32 by the second pump 23.

The heat pump 130 includes a flow path 30 through which a second heat transfer medium such as carbon dioxide gas circulates, the chiller 31, the water-cooled condenser 32, a compressor 33, and an expansion valve 34. The chiller 31, the water-cooled condenser 32, the compressor 33, and the expansion valve 34 are arranged in the flow path 30 in the order of the chiller 31 → the compressor 33 → the water-cooled condenser 32 → the expansion valve 34 → the chiller 31, and the second heat transfer medium circulates in this order. When the second heat transfer medium is fed from the chiller 31 to the water-cooled condenser 32, the compressor 33 is capable of compressing the second heat transfer medium to increase the temperature of the second heat transfer medium. Conversely, when the second heat transfer medium is fed from the water-cooled condenser 32 to the chiller 31, the expansion valve 34 is capable of expanding the second heat transfer medium to decrease the temperature of the second heat transfer medium. The compressor 33 and the expansion valve 34 are connected to the ECU 140 and controlled by the ECU 140.

Next, the following describes the ECU 140. The ECU 140 is an electronic control device including a well-known microcomputer including a processor such as a CPU, and a storage device such as a ROM, a RAM, and a flash memory. The ECU 140 is configured to be able to acquire various types of information.

Further, as shown in FIG. 1, the ECU 140 includes various functions including a function serving as a flow path determination unit 141, a function serving as a temperature prediction unit 142, a function serving as a determination unit 143, and a function serving as a flow path control unit 144.

The ECU 140 executes these various functions based on the acquired various information. The processor executes one or more programs stored in the storage device to accordingly implement these functions. The one or more programs correspond to one or more programs according to the present disclosure. Note that various functions may be implemented by an electronic circuit, which is hardware, or at least a part of the functions may be implemented by software, that is, by processing executed on the processor. Further, the ECU 140 may be comprised of a single hardware device, or may be comprised of a plurality of hardware devices that cooperate with each other to implement the various functions.

The following describes the various functions implemented in the ECU 140.

The flow path determination unit 141 is configured to determine a circulation flow path within the first circulation circuit 11.

For example, let us assume a situation where the first circulation circuit 11 is switched to the third flow path switching state.

In this situation, if the temperature of the first heat transfer medium flowing through the second flow path 11b is outside a second allowable temperature range, which is an allowable range for the temperature of the first heat transfer medium in the second flow path 11b, the flow path determination unit 141 determines to switch the connection of the first flow path 11a from the third flow path 11c to the second flow path 11b. For example, the flow path determination unit 141 determines to switch the connection of the first flow path 11a from the third flow path 11c to the second flow path 11b if the temperature of the first heat transfer medium in the second flow path 11b is higher than an upper limit value of the second allowable temperature range or lower than a lower limit value of the second allowable temperature range. The temperature of the first heat transfer medium flowing through the second flow path 11b is detected by a second water temperature sensor SE2 and is input to the ECU 140. The second water temperature sensor SE2 is disposed between the switching valve 18 and the storage battery 12 in the second flow path 11b; however, its position may be arbitrarily changed within the second flow path 11b.

Similarly, let us assume a situation where the first circulation circuit 11 is switched to the second flow path switching state. In this situation, the flow path determination unit 141 determines to switch the connection of the first flow path 11a from the second flow path 11b to the third flow path 11c if the temperature of the first heat transfer medium flowing through the third flow path 11c is higher than an upper limit value of a third allowable temperature range, which is an allowable range for the temperature of the first heat transfer medium in the third flow path 11c, or lower than a lower limit value of the third allowable temperature range. The temperature of the first heat transfer medium flowing through the third flow path 11c is detected by a third water temperature sensor SE3 and is input to the ECU 140. The third water temperature sensor SE3 is disposed between the switching valve 18 and the radiator 16 in the third flow path 11c; however, its position may be arbitrarily changed within the third flow path 11c.

The second allowable temperature range and the third allowable temperature range according to the first embodiment are each predetermined, but may be configured to be variable. For example, these ranges may be changed based on the status of the vehicle and/or the status of the components of the vehicle.

If there is a large temperature difference between the temperature of the first heat transfer medium in the second flow path 11b and the temperature of the first heat transfer medium in the third flow path 11c , switching between the flow paths 11b and 11c may cause the temperature of the first heat transfer medium flowing into the first flow path 11a to rise or drop sharply. Such an abrupt change is acceptable as long as it does not exceed the capacity of the heat pump 130.

However, if the change exceeds the capacity, it may affect the water-cooled condenser 32 side. This may result in the temperature of the third heat transfer medium in the second circulation circuit 21 being unlikely to be controlled to a desired value. This may affect the heater core 22 of the air conditioner, potentially leading to insufficient heating or cooling of the vehicle interior.

From this viewpoint, the ECU 140 of the first embodiment is configured to, when determining to switch the connection of the first flow path 11a from one of the second and third flow paths 11b and 11c to the other thereof, predict how the temperature of the first heat transfer medium will change and determine whether to execute the change based on the prediction result. The following describes various functions of the ECU 140 for achieving this purpose.

The temperature prediction unit 142 predicts, when it is determined by the flow path determination unit 141 that the connection of the first flow path 11a is switched from one of the second and third flow paths 11b and 11c to the other thereof, a temperature change rate in the first heat transfer medium flowing into the chiller 31 due to the switching of the connection of the first flow path 11a from one of the second and third flow paths 11b and 11c to the other thereof.

The temperature of the first heat transfer medium flowing into the chiller 31 is detected by a first water temperature sensor SE1 and is input to the ECU 140. The first water temperature sensor SE1 is disposed between the switching valve 18 and the chiller 31 in the first flow path 11a.

The following describes in detail the prediction of the temperature change rate in the first heat transfer medium.

When it is determined by the flow path determination unit 141 that the connection of the first flow path 11a is switched from one of the second and third flow paths 11b and 11c to the other thereof, the temperature prediction unit 142 predicts the temperature change rate dT1/dt, the temperature change rate dT2/dt, the temperature change rate dT3/dt, and dT4/dt using the following equations (Eq. 1) to (Eq. 4), respectively:
$\frac{dT 1}{dt} = \frac{Qh 1 + Q 1}{C 1}$ (Eq. 1) $\frac{dT 2}{dt} = \frac{Qbat + Qbh + Q 2}{C 2}$ (Eq. 2) $\frac{dT 3}{dt} = \frac{Qrd + Qmg + Qinv + Q 3}{C 3}$ (Eq. 3) $\frac{dT 4}{dt} = \frac{Qh 2}{C 4}$ (Eq. 4)

These equations (Eq. 1) through (Eq. 4) serve as temperature prediction models for predicting the amounts of temperature change. These temperature prediction models are stored in advance in the storage unit of the ECU 140.

Regarding the parameters in the above models, the temperature of the first heat transfer medium detected by the first water temperature sensor SE1 is T1, the temperature of the first heat transfer medium detected by the second water temperature sensor SE2 is T2, the temperature of the first heat transfer medium detected by the third water temperature sensor SE3 is T3, and the temperature of the third heat transfer medium detected by the fourth water temperature sensor SE4 is T4. These are respectively referred to as medium temperatures T1 to T4.

The detected medium temperatures T1 to T4 are stored in the storage unit of the ECU 140. The fourth water temperature sensor SE4 of the first embodiment is disposed downstream of the water-cooled condenser 32 and between the water-cooled condenser 32 and the heater core 22 in the flow path 21a of the second circulation circuit 21, but its position may be arbitrarily changed.

The temperature change rate in the first heat transfer medium detected by the first water temperature sensor SE1 is denoted as dT1/dt, the temperature change rate in the first heat transfer medium detected by the second water temperature sensor SE2 is denoted as dT2/dt, the temperature change rate in the first heat transfer medium detected by the third water temperature sensor SE3 is denoted as dT3/dt, and the temperature change rate in the third heat transfer medium detected by the fourth water temperature sensor SE4 is denoted as dT4/dt. Note that each of the temperature change rates dT1/dt, dT2/dt, dT3/dt, and dT4/dt is a predicted value and not a measured value.

Further, the heat capacity in the first flow path 11a is denoted as C1, the heat capacity in the second flow path 11b is denoted as C2, the heat capacity in the third flow path 11c is denoted as C3, and the heat capacity in the flow path 21a of the second circulation circuit is denoted as C4. Each of the heat capacities C1 to C4 is measured through experiments, simulations, or the like, and is stored in the storage unit of the ECU 140.

The heat exchange amount between the first heat transfer medium and the chiller 31 is denoted as Qh1, and the heat exchange amount between the third heat transfer medium and the water-cooled condenser 32 is denoted as Qh2. The heat exchange amount between the first heat transfer medium and the storage battery 12 is denoted as Qbat, and the heat exchange amount between the first heat transfer medium and the battery heater 13 is denoted as Qbh. The heat exchange amount between the first heat transfer medium and the inverter 14 is denoted as Qinv, the heat exchange amount between the first heat transfer medium and the motor 15 is denoted as Qmg, and the heat exchange amount between the first heat transfer medium and the radiator 16 is denoted as Qrd. The heat exchange amount between the third heat transfer medium and the heater core 22 is denoted as Qhc.

When the connection of the first flow path 11a is switched from one of the second and third flow paths 11b and 11c to the other thereof, the heat exchange amount between the first flow path 11a and the newly connected flow path (11b or 11c) is denoted as Q1. When the connection of the first flow path 11a is switched from one of the second and third flow paths 11b and 11c to the other thereof, the heat exchange amount between the second flow path 11b and the first flow path 11a is denoted as Q2. When the connection of the first flow path 11a is switched from one of the second and third flow paths 11b and 11c to the other thereof, the heat exchange amount between the third flow path 11c and the first flow path 11a is denoted as Q3.

The calculation methods for the heat exchange amounts Q1, Q2, and Q3 differ depending on how the connection of the first flow path 11a is changed between the second and third flow paths 11b and 11c.

The following describes the calculation methods for the heat exchange amounts Q1, Q2, and Q3.

When the flow path determination unit 141 determines to switch the connection of the first flow path 11a from the third flow path 11c to the second flow path 11b, the temperature prediction unit 142 calculates the heat exchange amounts Q1, Q2, and Q3 in accordance with the following equations (Eq. 5), (Eq. 6), and (Eq. 7), respectively: $Q 1 = K 1 \times V \times \left(T2-T1\right)$ (Eq. 5) $Q 2 = K 2 \times V \times \left(T1-T2\right)$ (Eq. 6) $Q 3 = 0$ (Eq. 7)

In the equations (Eq. 5) to (Eq. 7), the flow rate of the first heat transfer medium flowing through the first flow path 11a is denoted as V (hereinafter simply referred to as the flow rate V). The flow rate V is estimable based on a control command and/or an operating current of the first pump 17. Alternatively, a flow rate sensor for measuring the flow rate V may be provided, and the flow rate V can be acquired from the flow rate sensor.

In the equations (Eq. 5) to (Eq. 7), adjustment coefficients are denoted as K1 to K3. These equations (Eq 5), (Eq. 6), and (Eq. 7) are prediction models (heat-exchange amount prediction models) for the heat exchange amounts Q1, Q2, and Q3 in the case where the connection of the first flow path 11a is changed from the third flow path 11c to the second flow path 11b.

On the other hand, when the flow path determination unit 141 determines to switch the connection of the first flow path 11a from the second flow path 11b to the third flow path 11c, the temperature prediction unit 142 calculates the heat exchange amounts Q1, Q2, and Q3 in accordance with the following equations (Eq. 8), (Eq. 9), and (Eq. 10), respectively: $Q 1 = K 1 \times V \times \left(T3-T1\right)$ (Eq. 8) $Q 2 = 0$ (Eq. 9) $Q 3 = K 3 \times V \times \left(T1-T3\right)$ (Eq. 10)

These equations (Eq. 8), (Eq. 9), and (Eq. 10) are prediction models (heat-exchange amount prediction models) for the heat exchange amounts Q1, Q2, and Q3 in the case where the connection of the first flow path 11a is changed from the second flow path 11b to the third flow path 11c.

The following provides supplemental information regarding the heat exchange amounts Qh1, Qh2, Qbat, Qbh, Qinv, Qmg, Qrd, and Qhc.

Each of these heat exchange amounts Qh1, Qh2, Qbat, Qbh, Qinv, Qmg, Qrd, and Qhc varies depending on an amount of heat generation or an amount of heat absorption associated with the corresponding heat transfer medium and the corresponding component (e.g., 31, 32, 12, etc.) to be cooled or heated.

Specifically, the temperature prediction unit 142 is configured to predict the amount of heat generation (heat generation amount) or the amount of heat absorption (heat absorption amount) related to each of the components based on at least one of a value correlated with (i) a state of the corresponding one of the components and (ii) a control value for the corresponding one of the components. Additionally, the temperature prediction unit 142 is configured to predict each of the heat exchange amounts Qh1, Qh2, Qbat, Qbh, Qinv, Qmg, Qrd, and Qhc based on the predicted amount of heat generation or the predicted amount of heat absorption related to the corresponding one of the components.

Alternatively, the temperature prediction unit 142 may be configured to predict the amount of heat generation or the amount of heat absorption related to each of the components based on a state parameter correlated with the state of the corresponding component instead of the state itself, and a control parameter correlated with the control value for the corresponding component instead of the control value itself.

Specifically, the temperature prediction unit 142 acquires, from the ECU 140, values correlated with the temperature and flow rate of the second heat transfer medium passing through the chiller 31. Then, the temperature prediction unit 142 inputs these acquired values into a prediction model for the heat exchange amount Qh1 (a heat-exchange amount prediction model) related to a predicted amount of heat generation or heat absorption of the chiller 31 to predict the heat exchange amount Qh1 between the first heat transfer medium and the chiller 31 in accordance with the predicted amount of heat generation or heat absorption of the chiller 31.

When controlling the chiller 31, the ECU 140 measures the temperature of the second heat transfer medium and controls the opening degree of the expansion valve 34 such that the measured temperature of the second heat transfer medium reaches a target temperature, thereby controlling the flow rate of the second heat transfer medium passing through the chiller 31.

The temperature prediction unit 142 acquires the measured temperature of the second heat transfer medium as the value correlated with the "state of the chiller 31", and acquires the control value for the opening degree of the expansion valve 34, which is correlated with the flow rate of the second heat transfer medium passing through the chiller 31, as the value correlated with the "control value of the chiller 31".

Similarly, the temperature prediction unit 142 acquires, from the ECU 140, values correlated with the temperature and flow rate of the second heat transfer medium passing through the water-cooled condenser 32. Then, the temperature prediction unit 142 inputs the acquired values into a prediction model (a heat-exchange amount prediction model) for the heat exchange amount Qh2 related to a predicted amount of heat generation or heat absorption of the water-cooled condenser 32 to predict the heat exchange amount Qh2 between the third heat transfer medium and the water-cooled condenser 32 in accordance with the predicted amount of heat generation or heat absorption of the water-cooled condenser 32.

When controlling the water-cooled condenser 32, the ECU 140 measures the temperature of the second heat transfer medium and controls, for example, a discharge pressure of the compressor 33 such that the measured temperature of the second heat transfer medium reaches a target temperature, thereby controlling the flow rate of the second heat transfer medium passing through the water-cooled condenser 32.

The temperature prediction unit 142 acquires the measured temperature of the second heat transfer medium as the value correlated with the "state of the water-cooled condenser 32", and acquires the control value for controlling the discharge pressure of the compressor 33, which is correlated with the flow rate of the second heat transfer medium passing through the water-cooled condenser 32, as the value correlated with the "control value of the water-cooled condenser 32".

The temperature prediction unit 142 acquires, from the ECU 140, a charge/discharge amount of the storage battery 12, which indicates a value correlated with the "state of the storage battery 12". Then, the temperature prediction unit 142 inputs the acquired value into a prediction model (a heat-exchange amount prediction model) for the heat exchange amount Qbat related to a predicted amount of heat generation or heat absorption of the storage battery 12 to predict the heat exchange amount Qbat between the first heat transfer medium and the storage battery 12 in accordance with the predicted amount of heat generation or heat absorption of the storage battery 12. The charge/discharge amount of the storage battery 12 may be acquired from a current sensor of the vehicle.

The temperature prediction unit 142 acquires the temperature of the battery heater 13 as a value correlated with the "state of the battery heater 13". Then, the temperature prediction unit 142 inputs the acquired value into a prediction model for the heat exchange amount Qbh (a heat-exchange amount prediction model) related to a predicted amount of heat generation or heat absorption of the battery heater 13 to predict the heat exchange amount Qbh between the first heat transfer medium and the battery heater 13 in accordance with the predicted amount of heat generation or heat absorption of the battery heater 13. If a temperature sensor for measuring the temperature of the battery heater 13 is provided in the vehicle, the temperature of the battery heater 13 may be acquired from the temperature sensor. Alternatively, the temperature of the battery heater 13 (an actual temperature or a target temperature thereof) may be acquired from a control device (such as the ECU 140) that controls the battery heater 13, or from the battery heater 13 itself. In the case where the target temperature is used, a value for controlling the temperature of the battery heater 13 (a control value) is acquired, and the heat exchange amount Qbh is predicted based on the heat-exchange amount prediction model and this control value.

The temperature prediction unit 142 acquires a control value for controlling the operation of the inverter 14 and inputs the acquired control value into a prediction model for the heat exchange amount Qinv (heat-exchange amount prediction model) related to a predicted amount of heat generation or heat absorption of the inverter 14 to predict the heat exchange amount Qinv between the first heat transfer medium and the inverter 14 in accordance with the predicted amount of heat generation or heat absorption of the inverter 14. The control value for controlling the operation of the inverter 14 may be, for example, any one or all of an input voltage to the inverter 14, an input current value to the inverter 14, and an operating cycle of the inverter 14, which represents a switching cycle of switches constituting the inverter 14.

The temperature prediction unit 142 acquires a control value for controlling the operation of the motor 15 and inputs the acquired control value into a prediction model for the heat exchange amount Qmg (heat-exchange amount prediction model) related to a predicted amount of heat generation or heat absorption of the motor 15 to predict the heat exchange amount Qmg between the first heat transfer medium and the motor 15 in accordance with the predicted amount of heat generation or heat absorption of the motor 15. The control value for controlling the operation of the motor 15 may be any one, a combination, or all of a rotation speed of the motor 15, an output torque of the motor 15, an input voltage to the motor 15, and an input current value to the motor 15.

The temperature prediction unit 142 acquires the temperature of the radiator 16 as a value correlated with the "state of the radiator 16". Then, the temperature prediction unit 142 inputs the temperature of the radiator 16 into a prediction model for the heat exchange amount Qrd (a heat-exchange amount prediction model) related to a predicted amount of heat generation or heat absorption of the radiator 16 to predict the heat exchange amount Qrd between the outside air and the radiator 16 in accordance with the predicted amount of heat generation or heat absorption of the radiator 16. The temperature of the radiator 16 may be acquired from, for example, a temperature sensor that measures the temperature of the radiator 16.

Accordingly, as described above, the temperature prediction unit 142 predicts temperature change rates (specifically, dT1/dt and dT4/dt) in accordance with the predicted heat exchange amounts Q1, Q2, Q3, Qh1, Qh2, Qbat, Qbh, Qinv, Qmg, Qrd, and Qhc and the above equations (Eq. 1) to (Eq. 4).

Next, the following describes the determination unit 143.

The determination unit 143 determines whether to permit a change of the flow path of the first heat transfer medium based on, for example, the predicted temperature change rates dT1/dt and dT4/dt of the temperature prediction unit 142.

More specifically, the determination unit 143 determines to permit switching of the flow path of the first heat transfer medium between the second and third flow path 11b and 11c when determining that (i) a difference between a target temperature T4a and a current temperature T4 of the third heat transfer medium is within a predetermined range, (ii) the predicted temperature change rate dT1/dt of the first heat transfer medium is within a predetermined range, (iii) the predicted temperature change rate dT4/dt of the third heat transfer medium is within a predetermined range.

The following describes in detail how the determination unit 143 performs the determination.

The determination unit 143 of the first embodiment performs model predictive control by inputting the predicted temperature change rates dT1/dt and T4/dt into an evaluation function model Φ.

The model predictive control is a control method that performs optimization of the thermal management system (specifically, the predicted temperature change rates dT1/dt and dT4/dt) by predicting future responses of the thermal management system (specifically, the predicted temperature change rates dT1/dt and dT4/dt) at each time point. The evaluation function model Φ is shown in the following (Eq. 11). In the equation Eq. 11 of the evaluation function model Φ, Φth represents an evaluation term related to temperature as shown in (Eq. 12), and Φthvar represents an evaluation term related to temperature change as shown in (Eq. 13).$Φ = Φth + Φthvar$ (Eq. 11) $Φth = {\left(T4-T4a\right)}^{2}$ (Eq. 12) $Φthvar = f \left(\frac{dT 1}{dt}, L1min, L1max\right) + f \left(\frac{dT 4}{dt}, L2min, L2max\right)$ (Eq. 13) $\begin{matrix}f \left(X, Xmin, Xmax\right) \\ = \left\{\begin{matrix}K {\left(Xmin1-X\right)}^{2} if X < Xmin \\ K \left(ln\left(X-Xmin\right)+ln\left(Xmax-X\right)\right) K {\left(Xmin1-X\right)}^{2} if Xmin < X < Xmax \\ K {\left(X-Xmax\right)}^{2} if Xmax < X\end{matrix}\right.\end{matrix}$ (Eq. 14)

In the equation (Eq.12), T4a represents the target temperature T4a of the third heat transfer medium and is set by the ECU 140. The determination unit 143 acquires the target temperature T4a of the third heat transfer medium from the ECU 140.

In the equation (Eq. 13), L1min represents a value indicating a lower limit of an allowable range of the temperature change rate of the first heat transfer medium in the first circulation circuit 11, and L1max represents a value indicating an upper limit of the allowable range of the temperature change rate of the first heat transfer medium. These values L1min and L1max are predetermined based on the physical characteristics (such as thermal capacity) of the flow paths in the first circulation circuit 11 and the specifications of each component included in the first circulation circuit 11.

Similarly, in the equation (Eq. 13), L2min represents a value indicating a lower limit of an allowable range of the temperature change rate of the third heat transfer medium in the second circulation circuit 21, and L2max represents a value indicating an upper limit of the allowable range of the temperature change rate of the third heat transfer medium. These values L2min and L2max are predetermined based on the physical characteristics (such as thermal capacity) of the flow paths in the second circulation circuit 21 and the specifications of each component included in the second circulation circuit 21.

The equation (Eq. 14) shows the function f(X, Xmin, Xmax) used in the equation (Eq. 13). The function f is expressed by three equations (Equation 14) depending on the value of X. These equations are illustrated in FIG. 2.

As shown in FIG. 2, when the value X (the argument) input to the function f is within a predetermined range (X1 < X < X2), the output value (the return value) of the function f is zero or a value close to zero. Even if the value X is within the allowable range (Xmin < X < Xmax), the output value of the function increases exponentially as it approaches the upper or lower limit. If the value X is outside the predetermined range (X < X1 or X2 < X), the output value of the function f increases exponentially as it moves further away from the limits.

Based on the equation (Eq. 12), the temperature evaluation term Φth decreases as the difference between the current temperature of the third heat transfer medium and the target temperature becomes smaller. Additionally, based on the equation (Eq. 13) and the three equations (Eq. 14), the temperature change evaluation term Φthvar remains small as long as the temperature change rates (dT1/dt and dT4/dt) are within their respective predetermined ranges.

The determination unit 143 determines to permit switching of the flow path of the first heat transfer medium between the second and third flow path 11b and 11c when the output of the evaluation function model Φ, i.e., the combination of the output of the evaluation term Φth and the evaluation term Φthvar, is equal to or less than a threshold (e.g., 1.0). If the output of the evaluation function model Φ exceeds the threshold, the determination unit 143 determines not to permit the switching.

When switching of the flow path of the first heat transfer medium between the second and third flow path 11b and 11c is determined to be permitted, the flow path control unit 144 controls the switching valve 18 to change the connection of the first flow path 11a from one of the second and third flow paths 11b and 11c to the other thereof in accordance with the determination of the flow path determination unit 141.

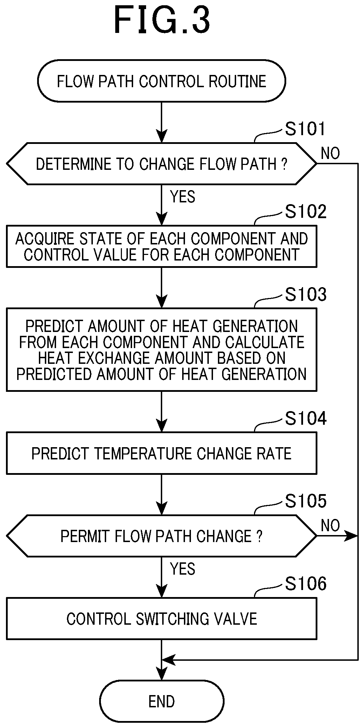

Next, the following describes a flow path control routine with reference to FIG. 3. This routine is executed by the ECU 140 at a predetermined timing, such as every predetermined cycle. Executing this routine enables the temperature control method of the first embodiment to be implemented.

When starting the flow path control routine, the ECU 140 serves as the flow path determination unit 141 to determine whether to switch the connection of the first flow path 11a from one of the second and third flow paths 11b and 11c to the other thereof in step S101. That is, in the third flow-path switching state, the ECU 140 determines to change the connection of the first flow path 11 from the third flow path 11c to the second flow path 11b when the temperature T2 of the first heat transfer medium is outside the second allowable temperature range, and determines not to change when the temperature T2 of the first heat transfer medium is within the second allowable temperature range.

On the other hand, in the second flow-path switching state, the ECU 140 determines to change the connection of the first flow path 11 from the second flow path 11b to the third flow path 11c when the temperature T3 of the first heat transfer medium is outside the third allowable temperature range, and determines not to change when the temperature T3 of the first heat transfer medium is within the third allowable temperature range.

When the connection of the first flow path 11a is determined not to be switched from one of the second and third flow paths 11b and 11c to the other thereof (NO in step S101), the ECU 140 terminates the flow-path control routine.

Otherwise, when the connection of the first flow path 11a is determined to be switched from one of the second and third flow paths 11b and 11c to the other thereof (YES in step S101), the ECU 140 serves as the temperature prediction unit 142 to acquire the state of each component and the control value for each component as described set forth above in step S102, and calculates each heat exchange amount Q1, Q2, Q3, Qh1, Qh2, Qbat, Qbh, Qinv, Qmg, Qrd, and Qhc as described set forth above in step S103.

Then, the ECU 140 serves as the temperature prediction unit 142 to execute a temperature prediction step that predicts, i.e., calculates, the temperature change rates dT1/dt to dT4/dt based on the calculated heat amounts Q1, Q2, Q3, Qh1, Qh2, Qbat, Qbh, Qinv, Qmg, Qrd, and Qhc in step S104. The calculation method in step S104 is as described above.

Following the operation in step S104, the ECU 140 functions as the determination unit 143 and determines whether to permit change of the flow path of the first heat transfer medium between the second and third flow path 11b and 11c based on the prediction results of the temperature prediction unit 142, i.e., the predicted temperature change rates (specifically, dT1/dt and dT4/dt) in step S105.

Specifically, as described above, the ECU 140 calculates the output of the evaluation function model Φ as described set forth above, and permits change of the flow path of the first heat transfer medium between the second and third flow path 11b and 11c upon determination that the output of the evaluation function model Φ is equal to or less than the predetermined threshold (e.g., 1 or less).

Otherwise, the determination unit 143 does not permit the change of the flow path of the first heat transfer medium between the second and third flow path 11b and 11c when the output of the evaluation function model Φ is greater than the predetermined threshold.

When the change of the flow path of the first heat transfer medium between the second and third flow path 11b and 11c is determined to be not permitted (NO in step S105), the ECU 140 terminates the flow-path control routine.

Otherwise, when the change of the flow path of the first heat transfer medium between the second and third flow path 11b and 11c is determined to be permitted (YES in step S105), the ECU 140 serves as the flow-path control unit 144 and executes a flow-path control step that controls the switching valve 18 to switch one of the flow paths 11b and 11c to the other thereof, which corresponds to the determination in step S101, in accordance with the determination result by the flow-path determination unit 141 in step S106.

That is, in the third flow-path switching state, the ECU 140 controls the switching valve 18 to change the connection of the first flow path 11a from the third flow path 11c to the second flow path 11b, and, in the second flow-path switching state, the ECU 140 controls the switching valve 18 to change the connection of the first flow path 11a from the second flow path 11b to the third flow path 11c in step S106. Then, the ECU 140 terminates the flow-path control routine.

The first embodiment configured as set forth above provides the following advantageous effects.

The ECU 140 determines to permit switching of the flow path of the first heat transfer medium between the second and third flow path 11b and 11c based on the prediction results of the temperature prediction unit 142, i.e., the predicted temperature change rates dT1/dt and dT4/dt of the temperature prediction unit 142.

When determining to permit switching of the flow path of the first heat transfer medium between the second and third flow path 11b and 11c, the ECU 140 executes flow-path control of switching the flow path of the first heat transfer medium from one of the second and third flow path 11b and 11c to the other thereof. This therefore makes it possible to prevent a rapid temperature change of the first heat transfer medium caused by the switching of the flow path of the first heat transfer medium from one of the second and third flow path 11b and 11c to the other thereof. This therefore prevents adverse effects due to the flow-path switching on the heat pump 130 and temperature adjustment on the side associated with the second circulation circuit 21.

Specifically, the ECU 140, functioning as the temperature prediction unit 142, acquires (i) the temperature of the first heat transfer medium (the medium temperature T1) at the inlet of the chiller 31 before the flow-path switching between the second and third flow paths 11b and 11c and (ii) the temperature of the first heat transfer medium at the outlet of the flow path 11b or 11c that is to be connected to the chiller 31 after the flow-path switching (medium temperature T2 or T3). Then, the ECU 140 functions as the temperature prediction unit 142 to input these temperatures into the temperature prediction model to predict the temperature change rate dT1/dt of the first heat transfer medium.

More specifically, when determining to switch the connection of the first flow path 11a from the third flow path 11c to the second flow path 11b, the ECU 140 inputs the medium temperature T1 and the medium temperature T2 into the equation (Eq. 5) to calculate the heat exchange amount Q1, and then inputs the heat exchange amount Q1 into the equation (Eq. 1) to predict, i.e., calculate, the temperature change rate dT1/dt. This makes it possible to appropriately predict the temperature change rate dT1/dt in consideration of the impact of the switching of the connection of the first flow path 11a from the third flow path 11c to the second flow path 11b.

The ECU 140 serves as the temperature prediction unit 142 to predict the amount of heat generation or heat absorption from each component, and input the predicted amount of heat generation or heat absorption into the temperature prediction model, thus predicting, i.e., calculating, the temperature change rate dT1/dt.

More specifically, the ECU 140 predicts the heat exchange amount Qh1 between the first heat transfer medium and the chiller 31, and inputs the heat exchange amount Qh1 into the equation (Eq. 1) to predict, i.e., calculate, the temperature change rate dT1/dt. This makes it possible to appropriately predict the temperature change rate dT1/dt in consideration of the impact of flow-rate switching on each component.

The ECU 140 serves as the temperature prediction unit 142 to predict the amount of heat generation or heat absorption related to at least one component based on at least one of a value correlated with (i) the state of the at least one component and (ii) a control value correlated with the operation of the at least one component.

In particular, the ECU 140 of the first embodiment acquires the measured temperature of the second heat transfer medium as a value correlated with the state of the chiller 31. Additionally, the ECU 140 acquires a control value for controlling the opening degree of the expansion valve 34 as a value correlated with the operation of the chiller 31. This makes it possible to appropriately predict the amount of heat absorption by the chiller 31 to thereby appropriately predict the temperature change rate dT1/dt.

The ECU 140 functions as the determination unit 143 that determines whether to permit the change of the flow path of the first heat transfer medium between the second and third flow path 11b and 11c based on the temperature change rate dT1/dt of the first heat transfer medium and the temperature change rate dT4/dt of the third heat transfer medium. Therefore, this configuration makes it possible to permit the change of the flow path of the first heat transfer medium between the second and third flow path 11b and 11c in consideration of the temperature change rate dT4/dt of the third heat transfer medium, thereby suppressing adverse effects on the side associated with the second circulation circuit 21.

More specifically, the ECU 140 acquires the target temperature T4a and the current medium temperature T4 of the third heat transfer medium. When determining that each of the difference between the target temperature T4a and the current medium temperature T4, the temperature change rate dT1/dt of the first heat transfer medium, and the temperature change rate dT4/dt of the third heat transfer medium are each within a corresponding one of the predetermined ranges, the ECU 140 permits the change of the flow path of the first heat transfer medium between the second and third flow path 11b and 11c. This therefore makes it possible to, if the difference between the target temperature T4a and the medium temperature T4 is small, permit the change of the flow path of the first heat transfer medium between the second and third flow path 11b and 11c, enabling the target temperature T4a to be maintained.

### Second Embodiment

The following describes the second embodiment in which the configuration of the temperature adjustment system 100 of the first embodiment is partially modified.

In the first embodiment, when the determination in step S105 is negative, that is, the flow-rate switching between the second and third flow paths 11b and 11c is not permitted (NO in step S105), the ECU 140 terminates the flow-path control routine.

This configuration may result in the switching of the connection of the first flow path 11a between the second and third flow paths 11b and 11c being not permitted indefinitely.

To address such a situation, the ECU 140 of the second embodiment includes, as a functional block, an instruction unit 145 that outputs, to at least one component, a control value that controls the operation of the at least one component. Specifically, when the determination in step S105 is negative, the ECU 140 executes the following instruction routine. The following describes the instruction routine.

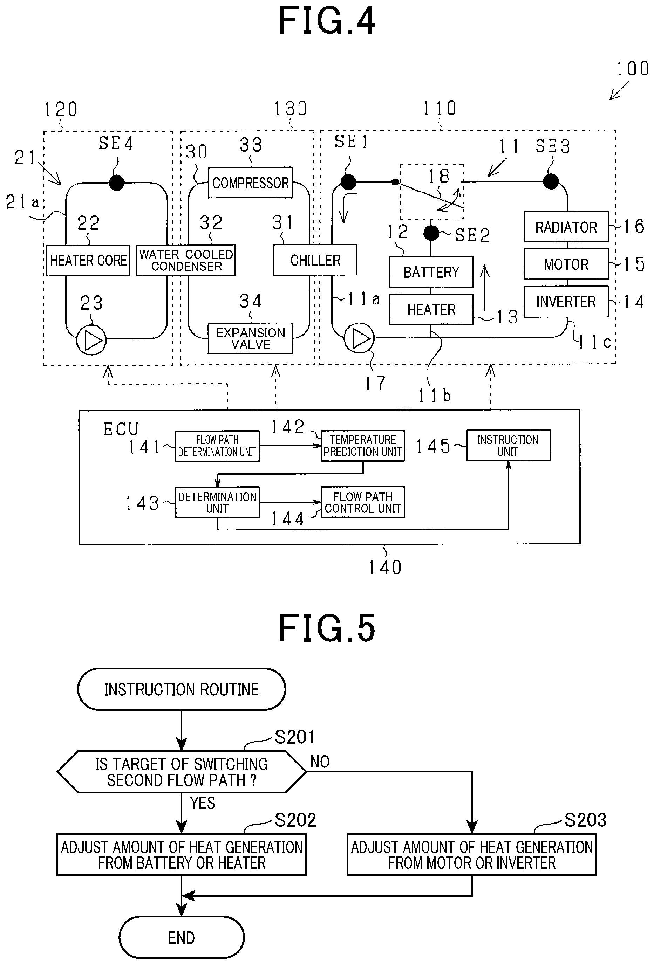

First, the following describes the function as the instruction unit 145. As shown in FIG. 4, the ECU 140 has the function as the instruction unit 145. The instruction unit 145 is operative to output, to each component of the temperature adjustment system 100, a control value for controlling the operation to the corresponding component to thereby control the operation of the corresponding component. For example, the instruction unit 145 is operative to output, to expansion valve 34 of the heat pump 130, a control value that instructs the opening degree of the expansion valve 34 of the heat pump 130 to thereby control the temperature and flow rate of the second heat transfer medium flowing into the chiller 31. That is, the instruction unit 145 enables control of the amount of heat generation or heat absorption of the chiller 31 with respect to the first heat transfer medium.

Similarly, the instruction unit 145 is operative to output, to the compressor 33 of the heat pump 130, a control value that instructs the discharge pressure of the compressor 33 of the heat pump 130 to thereby control the temperature and flow rate of the second heat transfer medium flowing into the water-cooled condenser 32. That is, the instruction unit 145 enables control of the amount of heat generation or heat absorption of the water-cooled condenser 32 with respect to the third heat transfer medium.

Additionally, the instruction unit 145 is operative to output, to the battery heater 13, a control value that instructs the temperature of the battery heater 13 to thereby control the temperature of the battery heater 13. That is, the instruction unit 145 enables control of the amount of heat generation of the battery heater 13 with respect to the first heat transfer medium.

Further, the instruction unit 145 is operative to output, to the inverter 14 for driving the motor 15, a control value that instructs the rotational speed or output torque (regenerative torque) of the motor 15 to thereby control (i) the motor 15, (ii) the inverter 14, and (iii) the charge/discharge amount of the storage battery 12. That is, the instruction unit 145 enables control of the amount of heat generation of, for example, the motor 15, the inverter 14, and the storage battery 12 with respect to the first heat transfer medium.

Next, the following describes an instruction routine with respect to Fig. 5. The instruction routine is programmed to be executed by the ECU 140 when the determination result in step S105 is negative, that is, the flow-rate switching between the second and third flow paths 11b and 11c is not permitted (NO in step S105).

In response to the negative determination in step S105, the ECU 140 serves as the determination unit 143 to determine whether the first circulation circuit 11 is the third flow path switching state in step S201. That is, the determination unit 143 determines whether the flow-path switching-which was determined by the flow-path determination unit 141 but not permitted in step S105-is the switching from the third flow path 11c to the second flow path 11b.

When determining that the first circulation circuit 11 is the third flow path switching state (that is, the flow-path switching to the second flow path 11b is not permitted) (YES in step S201), the ECU 140 serves as the instruction unit 145 to output, to at least one of the storage battery 12 and the battery heater 13, a control value so as to decrease or increase the heat generation amount of the at least one of the storage battery 12 and the battery heater 13, thus reducing the temperature change rate dT1/dt in step S202.

For example, when it is determined that the flow-path switching is not permitted due to the medium temperature T2 being high, the ECU 140 serves as the instruction unit 145 to output, to the battery heater 13, a control value that instructs a controlled temperature of the battery heater 13 to thereby suppress the heat generation amount of the battery heater 13.

Simultaneously or alternatively, the ECU 140 serves as the instruction unit 145 to output, to the inverter 14, a control value instructing a controlled rotational speed or controlled output torque (regenerative torque) of the motor 15 so as to reduce the charge/discharge amount of the storage battery 12, thus suppressing the heat generation amount of the storage battery 12. If an electric load other than the motor 15 is connected to the storage battery 12, the instruction unit 145 may output, to the electric load, a control value for suppressing the operation (power consumption) of the electric load.

That is, let us consider a case where, although the flow-path change from the third flow path 11c to the second flow path 11b was determined due to the temperature of the first heat transfer medium in the second flow path 11b being higher than the upper limit of the second allowable temperature range, the flow-path change is not permitted due to the temperature of the first heat transfer medium in the second flow path 11b being too high.

In this case, the ECU 140 serves as the instruction unit 145 to suppress at least one of the heat generation amount of the storage battery 12 and the heat generation amount of the battery heater 13 in step S202, thus lowering the temperature of the first heat transfer medium in the second flow path 11b. This enables a reduction in the temperature change rate dT1/dt, resulting in the flow-path change from the third flow path 11c to the second flow path 11b being likely to be permitted.

Additionally, let us consider another case where, although the flow-path change from the third flow path 11c to the second flow path 11b was determined, the flow-path change is not permitted due to the medium temperature T2 being low.

In this case, the ECU 140 serves as the instruction unit 145 to output, to the battery heater 13, a control value instructing a controlled temperature of the battery heater 13 so as to increase the heat generation amount of the battery heater 13.

Simultaneously or alternatively, the ECU 140 serves as the instruction unit 145 to output, to the inverter 14, a control value instructing a controlled rotational speed or controlled output torque (regenerative torque) of the motor 15 so as to increase the charge/discharge amount of the storage battery 12, thus increasing the heat generation amount of the storage battery 12. If an electric load other than the motor 15 is connected to the storage battery 12, the instruction unit 145 may output, to the external load, a control value for increasing the operation (power consumption) of the electric load.

That is, let us consider a case where, although the flow-path change from the third flow path 11c to the second flow path 11b was determined, the flow-path change is not permitted due to the temperature of the first heat transfer medium in the second flow path 11b being lower than the lower limit of the second allowable temperature range.

In this case, the ECU 140 serves as the instruction unit 145 to increase at least one of the heat generation amount of the storage battery 12 and the heat generation amount of the battery heater 13 in step S202, thus raising the temperature of the first heat transfer medium in the second flow path 11b. This enables a reduction in the temperature change rate dT1/dt, resulting in the flow-path change from the third flow path 11c to the second flow path 11b being likely to be permitted.

Otherwise, when determining that the first circulation circuit 11 is the second flow path switching state (that is, the flow-path switching to the third flow path 11c is not permitted) (NO in step S201), the ECU 140 serves as the instruction unit 145 to output, to the inverter 14, a control value instructing an increase or a decrease in at least one of the heat generation amount of the motor 15 and the heat generation amount of the inverter 14 in step S203.

That is, if the flow-path change from the second flow path 11b to the third flow path 11c, which was determined by the flow-path determination unit 11b in step S101, is not permitted by the determination unit 143, the ECU 140 serves as the instruction unit to output, to the inverter 14, a control value that instructs a decrease or an increase in at least one of the heat generation amount of the motor 15 and the heat generation amount of the inverter 14.

For example, if the flow-path change from the second flow path 11b to the third flow path 11c is not permitted due to the medium temperature T3 being high, the ECU 140 serves as the instruction unit 145 to output a control value instructing a controlled rotational speed or controlled output torque (regenerative torque) of the motor 15 so as to suppress the heat generation amount of the motor 15 and the inverter 14.

That is, let us consider a case where, although the flow-path change from the second flow path 11b to the third flow path 11c was determined due to the temperature of the first heat transfer medium in the third flow path 11c being higher than the upper limit of the third allowable temperature range, the flow-path change is not permitted due to the temperature of the first heat transfer medium in the third flow path 11c being too high.

In this case, the ECU 140 serves as the instruction unit 145 to suppress the heat generation amount of each of the motor 15 and the inverter 14 in step S203, thus lowering the temperature of the first heat transfer medium in the third flow path 11c. This enables a reduction in the temperature change rate dT1/dt, resulting in the flow-path change from the second flow path 11b to the third flow path 11c being likely to be permitted.

Additionally, let us consider another case where, although the flow-path change from the second flow path 11b to the third flow path 11c was determined, the flow-path change is not permitted due to the medium temperature T3 being low.

In this case, the ECU 140 serves as the instruction unit 145 to output, to the inverter 14, a control value instructing a controlled rotational speed or controlled output torque (regenerative torque) of the motor 15 so as to increase the heat generation amount of at least one of the motor 15 and the inverter 14.

That is, let us consider another case where, although the flow-path change from the second flow path 11b to the third flow path 11c was determined due to the temperature of the first heat transfer medium in the third flow path 11c being lower than the lower limit of the third allowable temperature range, the flow-path change is not permitted due to the temperature of the first heat transfer medium in the third flow path 11c being too low.

In this case, the ECU 140 serves as the instruction unit 145 to increase the heat generation amount of each of the motor 15 and the inverter 14 in step S203, thus raising the temperature of the first heat transfer medium in the third flow path 11c. This enables a reduction in the temperature change rate dT1/dt, resulting in the flow-path change from the second flow path 11b to the third flow path 11c being likely to be permitted.

After the operation in step S202 or step S203, the ECU 140 terminates the instruction routine. Note that the flow-path change between the flow paths 11b and 11c is also not permitted when the difference between the current temperature and the target temperature of the third heat transfer medium is large, or when the temperature change rate dT4/dt of the third heat transfer medium is large.

However, if the heat pump 130 is normally controlled, the current temperature of the third heat transfer medium should approach the target temperature and the temperature change rate dT4/dt of the third heat transfer medium should also become smaller over time. Therefore, the ECU 140 is configured not to perform any specific control such as the instruction routine. Instead, the ECU 140 executes general control, and the temperature adjustment system 100 waits for the lapse of time.

The second embodiment provides the following advantageous effects.

The ECU 140 includes the instruction unit 145 that outputs, to at least one selected component, such as the motor 15, a control value that instructs the at least one component to operate so as to cause the temperature change rate dT1/dt to approach the predetermined corresponding temperature range, i.e., become small, when the flow-path change between flow paths 11b and 11c is not permitted. Thus, when a rapid temperature change of the first heat transfer medium is predicted, the ECU 140 controls the operation of at least one selected component to adjust the heat generation amount of the at least one selected component, thus causing the temperature change rate dT1/dt to approach the corresponding predetermined temperature range. Therefore, it is possible to perform the flow-path change between the flow paths 11b and 11c while preventing a rapid temperature change of the first heat transfer medium.

### Third Embodiment

The following describes the third embodiment in which the configuration of the temperature adjustment system 100 of the first embodiment is partially modified.

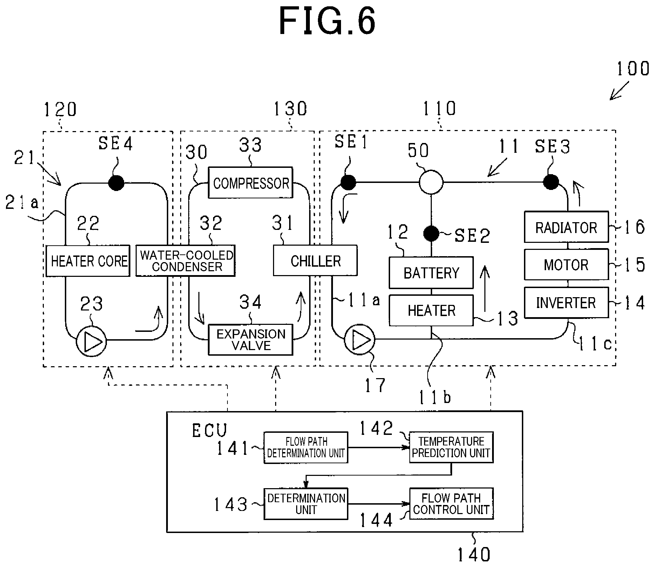

In the temperature adjustment system 100 of the third embodiment, as shown in FIG. 6, a flow-rate adjustment valve 50 is provided at the point (connection point) where the second flow path 11b and the third flow path 11c merge in place of the switching valve 18. The flow-rate adjustment valve 50, which is controlled by the ECU 140, is configured to adjust the ratio of a first flow rate of the first heat transfer medium flowing from the second flow path 11b to the first flow path 11a to a second flow rate of the first heat transfer medium flowing from the third flow path 11c to the first flow rate 11a.

The flow path determination unit 141 of the third embodiment is configured to determine change of the flow-rate ratio adjusted by the flow-rate adjustment valve 50.

Specifically, the flow path determination unit 141 is configured to determine change of the flow-rate ratio of the flow-rate adjustment valve 50 to increase the flow rate of the first heat transfer medium flowing through the second flow path 11b when the medium temperature T2 of the first heat transfer medium flowing through the second flow path 11b is higher than the upper limit of the second allowable temperature range. In contrast, the flow path determination unit 141 is configured to determine change of the flow-rate ratio of the flow-rate adjustment valve 50 to increase the flow rate of the first heat transfer medium flowing through the third flow path 11c when the medium temperature T3 of the first heat transfer medium flowing through the third flow path 11c is higher than the upper limit of the third allowable temperature range. Otherwise, the flow path determination unit 141 is configured to determine no change of the flow-rate ratio of the flow-rate adjustment valve 50 when the medium temperature T2 of the first heat transfer medium flowing through the second flow path 11b is lower than or equal to the upper limit of the second allowable temperature range and the medium temperature T3 of the first heat transfer medium flowing through the third flow path 11c is lower than or equal to the upper limit of the third allowable temperature range.

When determining the change of the flow-rate ratio of the flow-rate adjustment valve 50, the flow path determination unit 141 may be configured to freely determine the flow-rate ratio after the change. For example, the flow path determination unit 141 may be configured to increase or decrease the flow-rate ratio of the flow-rate adjustment valve 50 by a predetermined flow-rate ratio, or by a flow-rate ratio corresponding to the difference between the second allowable temperature range and the medium temperature T2 or between the third allowable temperature range and the medium temperature T3. That is, the flow path determination unit 141 may be configured to change the flow-rate ratio of the flow-rate adjustment valve 50 to a greater extent as the difference between the second allowable temperature range and the medium temperature T2 or between the third allowable temperature range and the medium temperature T3 becomes larger.

The temperature prediction unit 142 of the third embodiment is configured to predict, i.e., calculate, the heat exchange amounts Q1, Q2, and Q3 in accordance with the following equations (Eq. 15), (Eq. 16), and (Eq. 17), respectively: $Q 1 = K 1 \times \left\{V2\times \left(T2-T1\right)+V3\times \left(T3-T1\right)\right\}$ (Eq. 15) $Q 2 = K 2 \times V 2 \times \left(T1-T2\right)$ (Eq. 16) $Q 3 = K 3 \times V 3 \times \left(T1-T3\right)$ (Eq. 17) where:
the flow rate of the first heat transfer medium flowing in the second flow path 11b is represented as V2;
the flow rate of the first heat transfer medium flowing in the third flow path 11c is represented as V3.

The sum of the flow rate V2 and the flow rate V3 is equal to the flow rate V of the first heat transfer medium flowing in the first flow path 11a. The flow rate V2 and the flow rate V3 can be calculated based on the flow rate V and the flow-rate ratio of the flow-rate adjustment valve 50 after the change; specifically, these flow rates V2 and V3 are post-change values resulting from the change in the flow-rate ratio of the flow-rate adjustment valve 50.

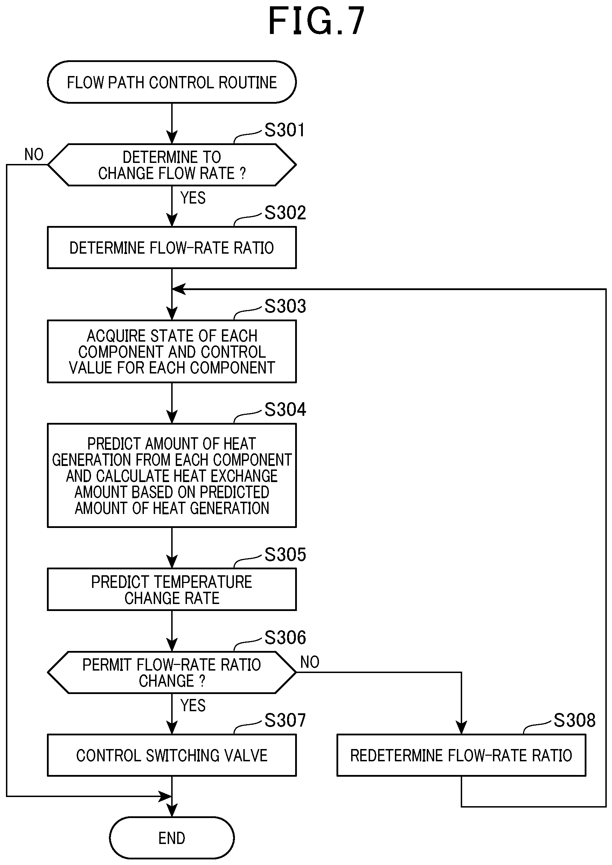

The following describes a flow path control routine of the third embodiment with reference to FIG. 7. This routine is executed by the ECU 140 at a predetermined timing, such as every predetermined cycle.

When starting the flow path control routine, the ECU 140 serves as the flow path determination unit 141 to determine whether to change the flow-rate ratio of the flow-rate adjustment valve 50 in step S301.

When determining not to change the flow-rate ratio of the flow-rate adjustment valve 50 (NO in step S301), the ECU 140 terminates the flow-path control routine.

Otherwise, when determining to change the flow-rate ratio of the flow-rate adjustment valve 50 (YES in step S301), the ECU 140 serves as the flow path determination unit 141 to determine how to change the flow-rate ratio of the flow-rate adjustment valve 50 in step S302.

Next, the ECU 140 serves as the temperature prediction unit 142 to acquire the state of each component and the control value for each component as described set forth above in step S303, and calculates each heat exchange amount Q1, Q2, Q3, Qh1, Qh2, Qbat, Qbh, Qinv, Qmg, Qrd, and Qhc in step S304. The calculation method of the heat exchange amounts Q1, Q2, and Q3 according to the third embodiment has been described set forth above, and the calculation method of the other heat exchange amounts Qh1, Qh2, Qbat, Qbh, Qinv, Qmg, Qrd, and Qhc is the same as that described in the first embodiment.

Then, the ECU 140 serves as the temperature prediction unit 142 to execute a temperature prediction step that predicts, i.e., calculates, the temperature change rates dT1/dt to dT4/dt based on the calculated heat amounts Q1, Q2, Q3, Qh1, Qh2, Qbat, Qbh, Qinv, Qmg, Qrd, and Qhc in step S305. The calculation method in step S305 is the same as that described in the first embodiment.

Following the operation in step S305, the ECU 140 functions as the determination unit 143 and determines whether to permit change of the flow-rate ratio of the flow-rate adjustment valve 50 based on the prediction results of the temperature prediction unit 142, i.e., the predicted temperature change rates (specifically, dT1/dt and dT4/dt) in step S306.

Specifically, as described above, the ECU 140 calculates the output of the evaluation function model Φ as described set forth above, and permits change of the flow-rate ratio of the flow-rate adjustment valve 50 upon determination that the output of the evaluation function model Φ is equal to or less than the predetermined threshold (e.g., 1 or less).

Otherwise, the determination unit 143 does not permit the change of the flow-rate ratio of the flow-rate adjustment valve 50 when the output of the evaluation function model Φ is greater than the predetermined threshold.

When the change of the flow-rate ratio of the flow-rate adjustment valve 50 is determined to be permitted (YES in step S306), the ECU 140 serves as the flow-path control unit 144 and controls the flow-rate adjustment valve 50 in accordance with the changed flow-rate ratio of the flow-rate adjustment valve 50 by the flow path determination unit 141 in step S307. Thereafter, the ECU 140 terminates the flow-path control routine.

Otherwise, when the change of the flow-rate ratio of the flow-rate adjustment valve 50 is determined not to be permitted (NO in step S306), the ECU 140 serves as the flow path determination unit 141 to redetermine the flow-rate ratio of the flow-rate adjustment valve 50 in step S308. In step S308, the ECU 140 serves as the flow path determination unit 141 to redetermine the flow-rate ratio of the flow-rate adjustment valve 50 so that the amount of change (extent of the change) in the redetermined flow-rate ratio is smaller than the amount of change in the previously determined flow-rate ratio.

For example, if the flow-rate ratio has been determined to be changed from 30% to 70%, the ECU 140 serves as the flow path determination unit 141 to redetermine the flow-rate ratio from 30% to 50% in step S308. Thereafter, the ECU 140 executes the operation in step S303 and the subsequent operations again.

The third embodiment provides the following advantageous effects.

The ECU 140, which changes the flow-rate ratio of the flow rate adjustment unit 50, makes it possible to maintain the temperature change rate dT1/dt within the predetermined range and precisely adjust the flow rate of the first heat transfer medium in accordance with the state of each component and/or the temperatures T1 to T3 of the first heat transfer medium in the respective first to third flow paths 11a to 11c.

When determining that the temperature change rate dT1/dt based on the changed flow-rate ratio lies outside the predetermined range, the ECU 140 serves as the flow path determination unit 141 to redetermine the flow-rate ratio of the flow-rate adjustment valve 50 in step S308. This makes it possible to reliably adjust the temperature change rate dT1/dt to be within the predetermined range.

### Fourth Embodiment

The following describes the fourth embodiment in which the configuration of the temperature adjustment system 100 of the first embodiment is partially modified.

The ECU 140 of the temperature adjustment system 100 according to each of the above first to third embodiments serves as the determination unit 143 to permit the change of the flow path of the first heat transfer medium between the second and third flow paths 11b and 11c (or change of the flow-rate ratio) when determining that (i) the difference between the target temperature T4a and the current temperature T4 of the third heat transfer medium is within the predetermined range, (ii) the predicted temperature change rate dT1/dt of the first heat transfer medium is within the predetermined range, (iii) the predicted temperature change rate dT4/dt of the third heat transfer medium is within the predetermined range.

The ECU 140 of the fourth embodiment serves as the determination unit 143 to determine whether to permit the change of the flow path of the first heat transfer medium between the second and third flow paths 11b and 11c in consideration of the state of the second heat transfer medium in the heat pump 130 in addition to the above determination.

The following describes in detail the subject matter of the fourth embodiment.

When a refrigerant gas (gas), such as carbon dioxide, is used as the second heat transfer medium utilized in the heat pump 130, a large amount of temperature change in the second heat transfer medium due to the change of the flow path of the first heat transfer medium between the flow paths 11b and 11c may cause a state change of the second heat transfer medium from gas to liquid. If the state of the second heat transfer medium changes, there is a possibility that the temperature and pressure of the second heat transfer medium may no longer be appropriately controlled in the heat pump 130 thereafter.

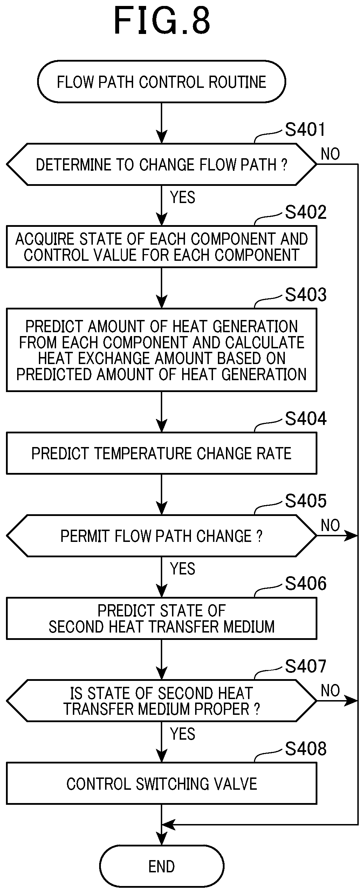

From this viewpoint, the ECU 140 of the fourth embodiment is configured to execute a flow path control routine as shown in FIG. 8 at a predetermined timing, as described above.

When starting the flow path control routine, the ECU 140 serves as the flow path determination unit 141 to determine whether to switch the connection of the first flow path 11a from one of the second and third flow paths 11b and 11c to the other thereof in step S401, similarly to step S101 described above.

When the connection of the first flow path 11a is determined not to be switched from one of the second and third flow paths 11b and 11c to the other thereof (NO in step S401), the ECU 140 terminates the flow-path control routine.

Otherwise, when the connection of the first flow path 11a is determined to be switched from one of the second and third flow paths 11b and 11c to the other thereof (YES in step S401), the ECU 140 serves as the temperature prediction unit 142 to calculate the temperature change rates dT1/dt to dT4/dt in step S402 to S404, similarly to steps S102 to S104.

Following the operation in step S404, the ECU 140 functions as the determination unit 143 and determines whether to permit change of the flow path of the first heat transfer medium between the second and third flow path 11b and 11c based on the prediction results of the temperature prediction unit 142, i.e., the predicted temperature change rates (specifically, dT1/dt and dT4/dt) in step S405, similarly to step S105.

When the change of the flow path of the first heat transfer medium between the second and third flow path 11b and 11c is determined to be not permitted (NO in step S405), the ECU 140 terminates the flow-path control routine.

Otherwise, when the change of the flow path of the first heat transfer medium between the second and third flow path 11b and 11c is determined to be permitted (YES in step S405), the ECU 140 serves as the temperature prediction unit 142 to predict the state of the second heat transfer medium thermally connected to the first heat transfer medium via the chiller 31 in step S406. Specifically, the ECU 140 serves as the temperature prediction unit 142 to input the temperature change rate dT1/dt of the first heat transfer medium, the temperature of the second heat transfer medium passing through the chiller 31 before the flow path change, and the opening degree of the expansion valve 34 into a state prediction model for predicting the state of the second heat transfer medium to thereby predict the state of the second heat transfer medium in step S406. Note that the opening degree of the expansion valve 34 is a control value correlated with the pressure or the flow rate of the second heat transfer medium. The state of the second heat transfer medium is, for example, refrigerant humidity.

Next, the ECU 140 serves as the determination unit 142 to determine whether the predicted state of the second heat transfer medium is proper in step S407. That is, the ECU 140 serves as the determination unit 142 to determine that the predicted state of the second heat transfer medium is proper (YES in step S407) upon determining that the predicted state of the second heat transfer medium is gas. Otherwise, the ECU 140 serves as the determination unit 142 to determine that the predicted state of the second heat transfer medium is not proper (NO in step S407) upon determining that the predicted state of the second heat transfer medium is liquid (including partial liquefaction).

When the determination result in step S407 is negative, the ECU 140 terminates the flow path control routine without changing the flow-path change between the flow paths 11b and 11c.

Otherwise, when the determination result in step S407 is affirmative, the ECU 140 serves as the flow path control unit 144 and executes the flow-path control step that controls the switching valve 18 to switch one of the flow paths 11b and 11c to the other thereof, which corresponds to the determination in step S401, in accordance with the determination result by the flow path determination unit 141 in step S408, similarly to step S106. Then, the ECU 140 terminates the flow path control routine.

The configuration described above according to the forth embodiment provides the following advantageous effects.

The ECU 140 of the fourth embodiment is configured to change the connection of the flow path of the first heat transfer medium between the second and third flow paths 11b and 11c in consideration of the state of the second heat transfer medium in the heat pump 130. This configuration therefore makes it possible to prevent an anomaly from occurring in the temperature adjustment on the side associated with the heat pump 130 and the second circulation circuit 21.

### Modifications

When calculating the evaluation term Φth, the ECU 140 of the above-described embodiments may be configured to, if the current temperature of the third heat transfer medium is greater than or equal to the target temperature, set the value of the evaluation term Φth to be zero, that is, assume that there is no difference between the current temperature and the target temperature. Note that if the current temperature of the third heat transfer medium is greater than or equal to the target temperature, the temperature of the heater core 22 will rise; however, it is generally possible to adjust the temperature of the air conditioner by mixing outside air. For this reason, if the current temperature of the third heat transfer medium is greater than or equal to the target temperature, the ECU 140 may be configured to assume that there is no difference between the current temperature and the target temperature.

In the above embodiments, the control value for controlling the operation of the compressor 33 may be, for example, the rotation speed or the amount of current of the compressor 33.

In the fourth embodiment, the state of the second heat transfer medium may be identified based on a pressure value thereof.

In the above-described embodiments, the temperature prediction unit 142 may predict the temperature of the first heat transfer medium in each of the flow paths 11a to 11c or the temperature of the third heat transfer medium in the flow path 21a. In this modification, if the temperature change rate dT1/dt is required, the temperature prediction unit 142 may calculate the temperature change rate dT1/dt in accordance with the predicted temperature of the first heat transfer medium in the first flow path 11a and the medium temperature T1. Note that the predicted temperature of at least one heat transfer medium may be used, instead of the corresponding temperature rate, to determine whether to permit the change of the flow path of the first heat transfer medium between the second and third flow paths 11b and 11c.

In the above-described embodiments, the determination unit 143 may determine whether to permit the change of the flow path of the first heat transfer medium between the second and third flow paths 11b and 11c based on whether the temperature change rate (or predicted temperature) of at least one heat transfer medium predicted by the temperature prediction unit 142 is within a predetermined range.

In the above-described embodiments, the determination unit 143 may not use the evaluation function model.

Specifically, the determination unit 143 may be configured to simply permit the change of the flow path of the first heat transfer medium between the second and third flow paths 11b and 11c when the difference between the target temperature and the current temperature of the third heat transfer medium, the temperature change rate dT1/dt of the first heat transfer medium, and the temperature change rate dT4/dt of the third heat transfer medium are each within the corresponding predetermined range.

In the above-described embodiments, the determination unit 143 may permit the change of the flow path between the second and third flow paths 11b and 11c when the temperature change rate dT2/dt and the temperature change rate dT3/dt are also within the respective predetermined ranges, in addition to the above-mentioned conditions for permitting the change.

In the above-described embodiments, the determination unit 143 inputs the difference between the medium temperature T4 and the target temperature T4a of the third heat transfer medium into the evaluation function model to consider the difference; however, the difference between the medium temperature T4 and the target temperature T4a may not be considered. Similarly, the determination unit 143 inputs the temperature change rate dT4/dt of the third heat transfer medium into the evaluation function model to consider the temperature change rate dT4/dt; however, the temperature change rate dT4/dt may not be considered. That is, the determination unit 143 may determine whether to permit the change of the flow path of the first heat transfer medium between the second and third flow paths 11b and 11c by considering only the temperature change rate dT1/dt, i.e., by inputting it into the evaluation function model.

In the above-described embodiments, the types and number of components arranged in the first circulation circuit 11 may be arbitrarily changed. Further, the types and number of components arranged in the second flow path 11b and the third flow path 11c may be arbitrarily changed. Similarly, the types and number of components arranged in the second circulation circuit 21 may be arbitrarily changed. The arrangement of these components may be arbitrarily changed.

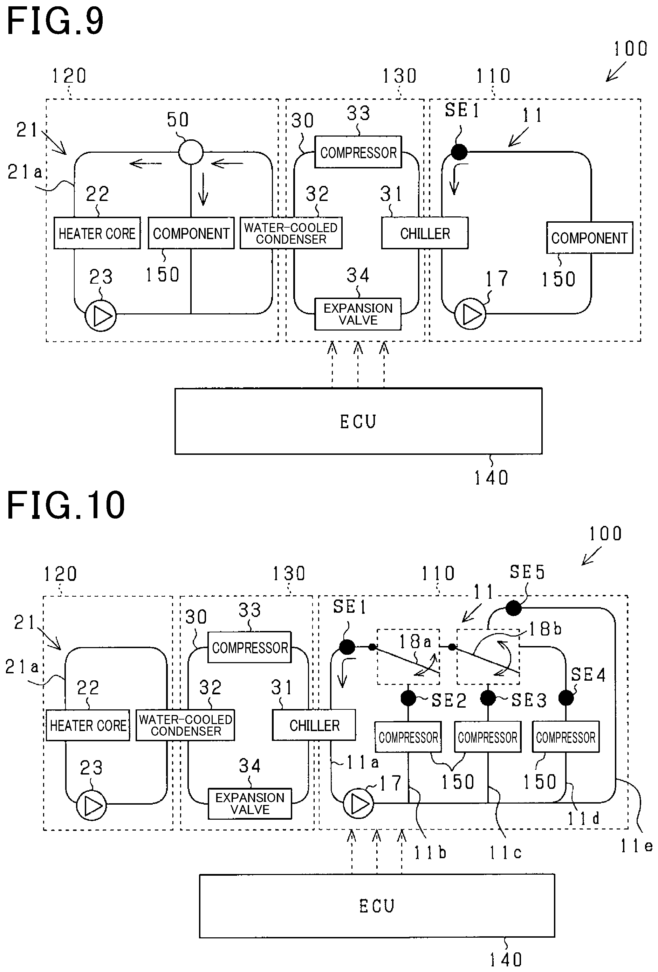

In the above-described embodiments, the branching of the flow paths in the circulation circuits (such as the first circulation circuit 11) may be modified as desired. For example, the flow path configuration may be as shown in FIG. 9 or FIG. 10.

In FIG. 9, the flow path 21a of the second circulation circuit 21 included in the high-temperature circuit part 120 branches, and the flow-rate ratio is changeable by the flow-rate adjustment valve 50. In FIG. 10, flow paths 11c, 11d, and 11e are connected in parallel and are switchable by a switching valve 18b, and a flow-path unit of the flow paths 11c, 11d, and 11e is connected in parallel to the second flow path 11b, and is switchable with respect to the first flow path 11a by a switching valve 18a. In FIG. 10, first to fifth water temperature sensors SE1 to SE5 are arranged in the respective flow paths 11a to 11e. In each of FIGS. 9 and 10, components 150 are provided in the corresponding temperature adjustment system 100 and the types and number of components included in the corresponding temperature adjustment system 100 may be arbitrarily changed.

In the above-described embodiments, the flow path determination unit 141 may determine the connection of the first flow path 11a to which of the second and third flow paths 11b and 11c in consideration of both the medium temperature T2 and the medium temperature T3. For example, when the medium temperature T2 is higher than the second allowable temperature and the medium temperature T3 is higher than the third allowable temperature, the flow path determination unit 141 may compare the difference between the upper limit of the second allowable temperature and the medium temperature T2 with the difference between the upper limit of the third allowable temperature and the medium temperature T3, and determine the connection of the first flow path 11a to one of the second and third flow paths 11b and 11c that has a larger difference.

In the above-described embodiments, the flow path determination unit 141 may be configured such that, when the change of the connection of the first flow path 11a between the second and third flow paths 11b and 11c is determined, whether to change the connection of the first flow path 11a between the second and third flow paths 11b and 11c again after a lapse of a predetermined time, thus preventing the connection of the first flow path 11a from being frequently changed between the second and third flow paths 11b and 11c.

In the above-described embodiments, the upper limit and the lower limit of the second allowable temperature may be changed based on the state of the components arranged in the second flow path 11b, the vehicle state, and/or other parameters. The vehicle state is, for example, an outside air temperature or a vehicle temperature. Specifically, when the temperature of the storage battery 12 or the vehicle is low (in the case of a cold start), the lower limit of the second allowable temperature may be raised so as to assist the temperature rise of the storage battery 12. Similarly, the upper limit and the lower limit of the third allowable temperature may be changed based on the state of the components arranged in the third flow path 11c, the vehicle state, and/or other parameters.

In the above-described embodiments, the temperature prediction models are mathematical equations obtained by experiments or simulations, but maps may be generated by experiments or simulations to perform prediction using the maps. Alternatively, deep learning may be performed to construct inference models, and the inference models may be used as the temperature prediction models.

Similarly, the heat-exchange amount prediction models are mathematical equations obtained by experiments or simulations, but maps may be generated by experiments or simulations to perform prediction using the maps. Alternatively, deep learning may be performed to construct inference models, and the inference models may be used as the heat-exchange amount prediction models.

Additionally, the state prediction model is a mathematical equation obtained by experiments or simulations, but a map may be generated by experiments or simulations to perform prediction using the map. Alternatively, deep learning may be performed to construct an inference model, and the inference model may be used as the state prediction model.

In the above-described embodiments, the heat exchange amounts Qh1, Qh2, Qbat, Qbh, Qinv, Qmg, Qrd, and Qhc of the respective components may be predetermined values.

In the above-described embodiments, each heat exchange amount Qh1, Qh2, Qbat, Qbh, Qinv, Qmg, Qrd, and Qhc of the corresponding component changes depending on variables including, for example, the flow rate of the heat transfer medium, the temperature of the heat transfer medium, the temperature difference between the heat transfer medium and the corresponding component, and the heat generation amount (or heat absorption amount) of the corresponding component. For this reason, the temperature prediction unit 142 may input these variables into the heat exchange amount prediction model for each heat exchange amount Qh1, Qh2, Qbat, Qbh, Qinv, Qmg, Qrd, and Qhc to thereby predict the corresponding heat exchange amount Qh1, Qh2, Qbat, Qbh, Qinv, Qmg, Qrd, and Qhc.

For example, the temperature prediction unit 142 may input the medium temperature T1, the flow rate of the first heat transfer medium passing through the chiller 31, and the temperature and flow rate of the second heat transfer medium passing through the chiller 31 into a heat-exchange amount prediction model for the heat exchange amount Qh1 to thereby predict the heat exchange amount Qh1 between the first heat transfer medium and the chiller 31. The flow rate of the first heat transfer medium passing through the chiller 31 is substantially equal to the flow rate V of the first flow path 11a.

The temperature and flow rate of the second heat transfer medium passing through the chiller 31 may be measured by one or more sensors installed in the temperature adjustment system or may be estimated from a control amount (such as an opening degree) of the expansion valve 34. Further, the types and number of the above variables for predicting the heat exchange amount Qh1 may be arbitrarily changed.

Similarly, the temperature prediction unit 142 may input the medium temperature T4, the flow rate of the third heat transfer medium passing through the water-cooled condenser 32, and the temperature and flow rate of the second heat transfer medium passing through the water-cooled condenser 32 into the heat-exchange amount prediction model for the heat exchange amount Qh2 to thereby predict the heat exchange amount Qh2 between the third heat transfer medium and the water-cooled condenser 32. The flow rate of the third heat transfer medium passing through the water-cooled condenser 32 is substantially equal to the flow rate of the third heat transfer medium flowing through the flow path 21a. For this reason, similarly to the flow rate V, the flow rate of the third heat transfer medium may be estimated from a control amount, an amount of current, or the like of the second pump 23.

Note that a flow rate sensor for measuring the flow rate of the third heat transfer medium may be provided, and the flow rate may be acquired from the flow rate sensor. The temperature and flow rate of the second heat transfer medium passing through the water-cooled condenser 32 may be measured by one or more sensors installed in the temperature adjustment system, or may be estimated from a control amount (such as a target temperature) of the compressor 33. Further, the types and number of the above variables for predicting the heat exchange amount Qh2 may be arbitrarily changed.

The temperature prediction unit 142 may input the medium temperature T2, the flow rate of the first heat transfer medium passing through the storage battery 12, the temperature of the storage battery 12, and the amount of current flowing through the storage battery 12 into a heat-exchange amount prediction model for the heat exchange amount Qbat to thereby predict the heat exchange amount Qbat between the first heat transfer medium and the storage battery 12. When the first flow path 11a and the second flow path 11b are connected to each other, the flow rate of the first heat transfer medium passing through the storage battery 12 is equal to the flow rate V; when they are not connected, the flow rate is zero. The temperature and the amount of current of the storage battery 12 are acquired from a temperature sensor and a current sensor (not shown) installed in the temperature adjustment system. Therefore, the heat generation amount changes depending on the state of the storage battery 12 (battery temperature and the amount of current), and the heat exchange amount Qbat also increases or decreases. Specifically, when the heat generation amount is estimated to be large based on the battery temperature and the amount of current of the storage battery 12, the heat exchange amount Qbat is also likely to increase. Further, the types and number of the above variables for predicting the heat exchange amount Qbat may be arbitrarily changed. A temperature sensor for measuring the temperature of the first heat transfer medium passing through the storage battery 12 may be provided in the temperature adjustment system, and the temperature acquired from the temperature sensor may be used instead of the medium temperature T2.

Further, the temperature prediction unit 142 may input the medium temperature T2, the flow rate of the first heat transfer medium passing through the battery heater 13, and the temperature (or a value of a control variable) of the battery heater 13 into a heat-exchange amount prediction model for the heat exchange amount Qbh to thereby predict the heat exchange amount Qbh between the first heat transfer medium and the battery heater 13. The flow rate of the first heat transfer medium passing through the battery heater 13 is the same as the flow rate of the first heat transfer medium passing through the storage battery 12. The temperature of the battery heater 13 is estimated from the control variable (such as a target temperature) of the battery heater 13. Therefore, the heat exchange amount Qbh also increases or decreases depending on the control variable of the battery heater 13. Specifically, when the heat generation amount is estimated to be large based on the control variable of the battery heater 13, the heat exchange amount Qbh is also likely to increase. Note that a sensor for measuring the temperature of the battery heater 13 may be provided in the temperature adjustment system, and the temperature of the battery heater 13 may be acquired from the sensor. Further, the types and number of the above variables for predicting the heat exchange amount Qbh may be arbitrarily changed. A temperature sensor for measuring the temperature of the first heat transfer medium passing through the battery heater 13 may be provided in the temperature adjustment system, and the temperature acquired from the temperature sensor may be used instead of the medium temperature T2.

Moreover, the temperature prediction unit 142 may input the medium temperature T3, the flow rate of the first heat transfer medium passing through the inverter 14, and the temperature (or a value of a control variable) of the inverter 14 into a heat-exchange amount prediction model for the heat exchange amount Qinv to thereby predict the heat exchange amount Qinv between the first heat transfer medium and the inverter 14. When the first flow path 11a and the third flow path 11c are connected to each other, the flow rate of the first heat transfer medium passing through the inverter 14 is equal to the flow rate V; when they are not connected, the flow rate is zero.

The temperature of the inverter 14 may be acquired from a temperature sensor (not shown) for measuring the temperature of the inverter 14, or may be estimated based on the control variable or other parameters of the inverter 14. The control variable of the inverter 14 includes, for example, a value correlated with the amount of current to the inverter 14, a switching period of each switch constituting the inverter 14. The types and number of the above variables for predicting the heat exchange amount Qinv may be arbitrarily changed. A temperature sensor for measuring the temperature of the first heat transfer medium passing through the inverter 14 may be provided in the temperature adjustment system, and the temperature acquired from the temperature sensor may be used instead of the medium temperature T3.

Similarly, the temperature prediction unit 142 may input the medium temperature T3, the flow rate of the first heat transfer medium passing through the motor 15, and the temperature (or a value of a control variable) of the motor 15 into a heat-exchange amount prediction model for the heat exchange amount Qmg to thereby predict the heat exchange amount Qmg between the first heat transfer medium and the motor 15. The flow rate of the first heat transfer medium passing through the motor 15 is the same as the flow rate of the first heat transfer medium passing through the inverter 14. The temperature of the motor 15 may be acquired from a temperature sensor (not shown) for measuring the temperature of the motor 15, or may be estimated based on the control variable or other parameters of the motor 15. The control variable of the motor 15 includes, for example, a target value, such as a target rotation speed or target output torque of the motor 15.

The temperature of the motor 15 may be estimated based on the control variable of the motor 15. Note that the temperature of the motor 15 may be estimated based on, for example, the amount of current to the motor 15. Instead of the temperature of the motor 15, the heat generation amount may be used. Further, the types and number of the above variables for predicting the heat exchange amount Qmg may be arbitrarily changed. A temperature sensor for measuring the temperature of the first heat transfer medium passing through the motor 15 may be provided in the temperature adjustment system, and the temperature acquired from the temperature sensor may be used instead of the medium temperature T3.

Additionally, the temperature prediction unit 142 may input the medium temperature T3, the flow rate of the first heat transfer medium passing through the radiator 16, and the temperature of the radiator 16 into a heat-exchange amount prediction model for the heat exchange amount Qrd to thereby predict the heat exchange amount Qrd between the first heat transfer medium and the radiator 16. The flow rate of the first heat transfer medium passing through the radiator 16 is the same as the flow rate of the first heat transfer medium passing through the inverter 14. Further, the types and number of the above variables for predicting the heat exchange amount Qrd may be arbitrarily changed. A temperature sensor for measuring the temperature of the first heat transfer medium passing through the radiator 16 may be provided in the temperature adjustment system, and the temperature acquired from the temperature sensor may be used instead of the medium temperature T3.

The control apparatuses and the methods related thereto described in the present disclosure may be implemented by a dedicated computer provided by configuring a processor and a memory programmed to execute one or more functions embodied by one or more computer programs. Alternatively, the control apparatuses and the methods related thereto described in the present disclosure may be implemented by a dedicated computer provided by configuring a processor with one or more dedicated hardware logic circuits. Alternatively, the control apparatuses and the methods related thereto described in the present disclosure may be implemented by one or more dedicated computers configured by a combination of a processor and a memory programmed to execute one or more functions and a processor configured by one or more hardware logic circuits. The one or more computer programs may be stored, as instructions executable by a computer, in a computer-readable non-transitory tangible recording medium.

The following describes characteristic configurations extractable from the above embodiments.

### [FIRST CHARACTERISTIC CONFIGURATION]

The first characteristic configuration provides a temperature control apparatus (140) for a temperature adjustment system (100) that includes:
a first circulation circuit (11) through which a first heat transfer medium circulates, the first circulation circuit being configured such that a flow path of the first heat transfer medium is changeable; and
a heat pump (130) configured to circulate a second heat transfer medium between a first heat exchanger (31) and a second heat exchanger (32), the heat pump comprising a pressure converter (33, 34) configured to compress or expand the second heat transfer medium during circulation of the second heat transfer medium to change a temperature of the second heat transfer medium.

The first heat transfer medium flows from the first circulation circuit into the first heat exchanger exchanging heat with the second heat transfer medium, so that a temperature of the first heat transfer medium is adjusted.

The temperature control apparatus includes a temperature prediction unit (142) configured to calculate, when change of the flow path of the first heat transfer medium is determined, a predicted temperature or a predicted temperature change rate of the first heat transfer medium flowing into the first heat exchanger. The temperature control apparatus includes a flow path control unit (144) configured to control, based on the predicted temperature or the predicted temperature change rate of the first heat transfer medium, the change of the flow path of the first heat transfer medium.

### [SECOND CHARACTERISTIC CONFIGURATION]

In the temperature control apparatus according to the second characteristic configuration, which depends from the first characteristic configuration, the temperature prediction unit is configured to:
acquire a first value (T1) of the first heat transfer medium at an inlet of the first heat exchanger before the change of the flow path of the first heat transfer medium and a second value (T2, T3) of the temperature of the first heat transfer medium at an outlet of a changed flow path of the first heat transfer medium that is scheduled to be connected to the first heat exchanger due to the change of the flow path of the first heat transfer medium; and
input the first value and the second value of the temperature of the first heat transfer medium into a temperature prediction model to thereby calculate the predicted temperature or the predicted temperature change rate of the first heat transfer medium.

### [THIRD CHARACTERISTIC CONFIGURATION]

In the temperature control apparatus according to the third characteristic configuration, which depends from the first or second characteristic configuration, the first circulation circuit includes a plurality of flow paths including the flow path of the first heat transfer medium. At least one component is provided in each of the plurality of flow paths as a target to be heated or cooled by the first heat transfer medium. The temperature prediction unit is configured to:
predict a heat generation amount or a heat absorption amount from the at least one component of each flow path; and
input the heat generation amount or the heat absorption amount related to the at least one component of each flow path into the temperature prediction model to thereby calculate the predicted temperature or the predicted temperature change rate of the first heat transfer medium.

### [FOURT CHARACTERISTIC CONFIGURATION]

In the temperature control apparatus according to the fourth characteristic configuration, which depends from the third characteristic configuration, the temperature prediction unit is configured to predict, based on (i) a value correlated with a state of the at least one component of each flow path and (ii) a value correlated with a control value for the at least one component of each flow path, the heat generation amount or the heat absorption amount from the at least one component of each flow path.

### [FIFTH CHARACTERISTIC CONFIGURATION]

The temperature control apparatus according to the fifth characteristic configuration, which depends from any one of the first to fourth characteristic configurations, further includes a determination unit (143) configured to determine whether the predicted temperature or the predicted temperature change rate is within a corresponding predetermined range to thereby determine whether to permit the change of the flow path of the first heat transfer medium.

The flow path control unit is configured to execute the change of the flow path of the first heat transfer medium when the change of the flow path of the first heat transfer medium is determined to be permitted by the determination unit.

### [SIXT CHARACTERISTIC CONFIGURATION]

In the temperature control apparatus according to the sixth characteristic configuration, which depends from the fifth characteristic configuration, the first circulation circuit includes a plurality of flow paths including the flow path of the first heat transfer medium, and the determination unit is configured to determine not to permit the change of the flow path of the first heat transfer medium when determining that the predicted temperature or the predicted temperature change rate is outside the corresponding predetermined range.

The temperature control apparatus further includes an instruction unit (145) configured to output, to the at least one component of each flow path, a control signal when the change of the flow path of the first heat transfer medium is determined not to be permitted, the control signal controlling the at least one component of each flow path such that the predicted temperature or the predicted temperature change rate approaches the corresponding predetermined range.

### [SEVENTH CHARACTERISTIC CONFIGURATION]

In the temperature control apparatus according to the seventh characteristic configuration, which depends from any one of the first to sixth characteristic configurations, the temperature adjustment system includes a second circulation circuit (21) in which a third heat transfer medium circulates. The heat pump is configured to thermally connect the third heat transfer medium flowing from the second circulation circuit to the second heat exchanger to cause heat exchange between the second heat transfer medium and the third heat transfer medium, thus adjusting a temperature of the third heat transfer medium. The temperature prediction unit is configured to calculate a predicted temperature change rate of the third heat transfer medium.

The temperature control apparatus further includes a determination unit (143) configured to determine whether to permit the change of the flow path of the first heat transfer medium in accordance with the predicted temperature change rate of the first heat transfer medium and the predicted temperature change rate of the third heat transfer medium.

### [EIGHTH CHARACTERISTIC CONFIGURATION]

In the temperature control apparatus according to the eighth characteristic configuration, which depends from the seventh characteristic configuration, the determination unit is configured to:
acquire a target temperature and a current temperature of the third heat transfer medium; and
determine to permit the change of the flow path of the first heat transfer medium upon determination that each of (i) a difference between the target temperature and the current temperature of the third heat transfer medium, (ii) the temperature change rate of the first heat transfer medium, and (iii) the temperature change rate of the third heat transfer medium is within a corresponding predetermined range.

### [NINTH CHARACTERISTIC CONFIGURATION]

In the temperature control apparatus according to the ninth characteristic configuration, which depends from any one of the first to seventh characteristic configurations, the flow path of the first heat transfer medium includes at least two flow paths. The temperature adjustment system further includes:
a flow-rate adjustment valve (50) provided at a point where the at least two flow paths merge, the flow-rate adjustment valve being controlled to change a flow-rate ratio of each of the at least two flow paths of the first heat transfer medium into the inlet of the first heat exchanger; and
a flow-rate ratio determination unit configured to determine the flow-rate ratio of each of the at least two flow paths.

The temperature prediction unit is configured to:
predict, when change of the flow-rate ratio of each of the at least two flow paths is determined, a heat exchange amount (Q1) between the first heat exchanger and the first heat transfer medium based on (i) the flow-rate ratio of each of the at least two flow paths and (ii) a value of the temperature of the first heat transfer medium in each of the at least two flow paths; and
input the predicted heat exchange amount into a temperature prediction model to thereby calculate the predicted temperature or the predicted temperature change rate of the first heat transfer medium flowing into the inlet of the first heat exchanger.

The flow path control unit is configured to control the flow-rate adjustment valve to change the flow-path ratio of each of the at least two flow paths when the predicted temperature or the predicted temperature change rate is determined to be within the corresponding predetermined range.

The flow-path ratio determination unit is configured to redetermine, when the predicted temperature or the predicted temperature change rate is determined not to be within the corresponding predetermined range, the flow-rate ratio until the predicted temperature or the predicted temperature change rate is determined to be within the corresponding predetermined range.

### [TENTH CHARACTERISTIC CONFIGURATION]

The temperature control apparatus according to the tenth characteristic configuration, which depends from any one of the first to ninth characteristic configurations, further includes:
a state prediction unit configured to predict, when the change of the flow path of the first heat transfer medium is determined, a state of the second heat transfer medium based on the predicted temperature or the temperature change rate of the first heat transfer medium predicted by the temperature prediction unit; and
a determination unit (143) configured to determine whether to permit the change of the flow path of the first heat transfer medium based on the state of the second heat transfer medium predicted by the state prediction unit.

### [ELEVENTH CHARACTERISTIC CONFIGURATION]

In the temperature control apparatus according to the eleventh characteristic configuration, which depends from the tenth characteristic configuration, the state prediction unit is configured to input, into a state prediction model for predicting the state of the second heat transfer medium, (i) the predicted temperature or the temperature change rate of the first heat transfer medium, (ii) a value of the temperature of the second heat transfer medium before the flow-path change, and (iii) a pressure control variable instructing an operation of the pressure converter to thereby predict the state of the second heat transfer medium.

### [TWELFTH CHARACTERISTIC CONFIGURATION]

The twelfth characteristic configuration provides a temperature control program executable by a temperature control apparatus for a temperature adjustment system (100) that includes:
a first circulation circuit (11) through which a first heat transfer medium circulates, the first circulation circuit being configured such that a flow path of the first heat transfer medium is changeable; and
a heat pump (130) configured to circulate a second heat transfer medium between a first heat exchanger (31) and a second heat exchanger (32), the heat pump comprising a pressure converter (33, 34) configured to compress or expand the second heat transfer medium during circulation of the second heat transfer medium to change a temperature of the second heat transfer medium.

The first heat transfer medium flows from the first circulation circuit into the first heat exchanger exchanging heat with the second heat transfer medium, so that a temperature of the first heat transfer medium is adjusted.

The temperature control program causes the temperature control apparatus to:
calculate, when change of the flow path of the first heat transfer medium is determined, a predicted temperature or a predicted temperature change rate of the first heat transfer medium flowing into the first heat exchanger; and
control, based on the predicted temperature or the predicted temperature change rate of the first heat transfer medium, the change of the flow path of the first heat transfer medium.

### [THIRTEENTH CHARACTERISTIC CONFIGURATION]

The thirteenth characteristic configuration provides a temperature control method for a temperature adjustment system (100) that includes:
a first circulation circuit (11) through which a first heat transfer medium circulates, the first circulation circuit being configured such that a flow path of the first heat transfer medium is changeable; and
a heat pump (130) configured to circulate a second heat transfer medium between a first heat exchanger (31) and a second heat exchanger (32), the heat pump comprising a pressure converter (33, 34) configured to compress or expand the second heat transfer medium during circulation of the second heat transfer medium to change a temperature of the second heat transfer medium.

The first heat transfer medium flows from the first circulation circuit into the first heat exchanger exchanging heat with the second heat transfer medium, so that a temperature of the first heat transfer medium is adjusted.

The temperature control method includes:
calculating, when change of the flow path of the first heat transfer medium is determined, a predicted temperature or a predicted temperature change rate of the first heat transfer medium flowing into the first heat exchanger; and
controlling, based on the predicted temperature or the predicted temperature change rate of the first heat transfer medium, the change of the flow path of the first heat transfer medium.

While the illustrative embodiments of the present disclosure have been described herein, the present disclosure is not limited to the embodiments and configurations described herein. Specifically, the present disclosure can include any and all modified embodiments and modifications within the range of equivalency of the present disclosure. Additionally, various combinations of the embodiments, modified combinations to which at least one element has been added, or modified combinations from which at least one element has been eliminated are within the scope of the present disclosure and/or the patentable ideas of the present disclosure.

## Claims

1. A temperature control apparatus (140) for a temperature adjustment system (100) that includes:
a first circulation circuit (11) through which a first heat transfer medium circulates, the first circulation circuit being configured such that a flow path of the first heat transfer medium is changeable; and
a heat pump (130) configured to circulate a second heat transfer medium between a first heat exchanger (31) and a second heat exchanger (32), the heat pump comprising a pressure converter (33, 34) configured to compress or expand the second heat transfer medium during circulation of the second heat transfer medium to change a temperature of the second heat transfer medium,
the first heat transfer medium flowing from the first circulation circuit into the first heat exchanger exchanging heat with the second heat transfer medium, so that a temperature of the first heat transfer medium is adjusted,
the temperature control apparatus comprising:
a temperature prediction unit (142) configured to calculate, when change of the flow path of the first heat transfer medium is determined, a predicted temperature or a predicted temperature change rate of the first heat transfer medium flowing into the first heat exchanger; and
a flow path control unit (144) configured to control, based on the predicted temperature or the predicted temperature change rate of the first heat transfer medium, the change of the flow path of the first heat transfer medium.

2. The temperature control apparatus according to claim 1, wherein:
the temperature prediction unit is configured to:
acquire a first value (T1) of the first heat transfer medium at an inlet of the first heat exchanger before the change of the flow path of the first heat transfer medium and a second value (T2, T3) of the temperature of the first heat transfer medium at an outlet of a changed flow path of the first heat transfer medium that is scheduled to be connected to the first heat exchanger due to the change of the flow path of the first heat transfer medium; and
input the first value and the second value of the temperature of the first heat transfer medium into a temperature prediction model to thereby calculate the predicted temperature or the predicted temperature change rate of the first heat transfer medium.

3. The temperature control apparatus according to claim 1, wherein:
the first circulation circuit includes a plurality of flow paths including the flow path of the first heat transfer medium;
at least one component is provided in each of the plurality of flow paths as a target to be heated or cooled by the first heat transfer medium; and
the temperature prediction unit is configured to:
predict a heat generation amount or a heat absorption amount from the at least one component of each flow path; and
input the heat generation amount or the heat absorption amount related to the at least one component of each flow path into the temperature prediction model to thereby calculate the predicted temperature or the predicted temperature change rate of the first heat transfer medium.

4. The temperature control apparatus according to claim 3, wherein:
the temperature prediction unit is configured to predict, based on (i) a value correlated with a state of the at least one component of each flow path and (ii) a value correlated with a control value for the at least one component of each flow path, the heat generation amount or the heat absorption amount from the at least one component of each flow path.

5. The temperature control apparatus according to any one of claims 1 to 4, further comprising:
a determination unit (143) configured to determine whether the predicted temperature or the predicted temperature change rate is within a corresponding predetermined range to thereby determine whether to permit the change of the flow path of the first heat transfer medium, wherein:
the flow path control unit is configured to execute the change of the flow path of the first heat transfer medium when the change of the flow path of the first heat transfer medium is determined to be permitted by the determination unit.

6. The temperature control apparatus according to claim 5, wherein:
the first circulation circuit includes a plurality of flow paths including the flow path of the first heat transfer medium; and
the determination unit is configured to determine not to permit the change of the flow path of the first heat transfer medium when determining that the predicted temperature or the predicted temperature change rate is outside the corresponding predetermined range,
the temperature control apparatus further comprising:
an instruction unit (145) configured to output, to the at least one component of each flow path, a control signal when the change of the flow path of the first heat transfer medium is determined not to be permitted, the control signal controlling the at least one component of each flow path such that the predicted temperature or the predicted temperature change rate approaches the corresponding predetermined range.

7. The temperature control apparatus according to any one of claims 1 to 4, wherein:
the temperature adjustment system includes a second circulation circuit (21) in which a third heat transfer medium circulates;
the heat pump is configured to thermally connect the third heat transfer medium flowing from the second circulation circuit to the second heat exchanger to cause heat exchange between the second heat transfer medium and the third heat transfer medium, thus adjusting a temperature of the third heat transfer medium; and
the temperature prediction unit is configured to calculate a predicted temperature change rate of the third heat transfer medium, the temperature control apparatus further comprising:
a determination unit (143) configured to determine whether to permit the change of the flow path of the first heat transfer medium in accordance with the predicted temperature change rate of the first heat transfer medium and the predicted temperature change rate of the third heat transfer medium.

8. The temperature control apparatus according to claim 7, wherein:
the determination unit is configured to:
acquire a target temperature and a current temperature of the third heat transfer medium; and
determine to permit the change of the flow path of the first heat transfer medium upon determination that each of (i) a difference between the target temperature and the current temperature of the third heat transfer medium, (ii) the temperature change rate of the first heat transfer medium, and (iii) the temperature change rate of the third heat transfer medium is within a corresponding predetermined range.

9. The temperature control apparatus according to any one of claims 1 to 4, wherein:
the flow path of the first heat transfer medium includes at least two flow paths;
the temperature adjustment system further comprising:
a flow-rate adjustment valve (50) provided at a point where the at least two flow paths merge, the flow-rate adjustment valve being controlled to change a flow-rate ratio of each of the at least two flow paths of the first heat transfer medium into the inlet of the first heat exchanger; and
a flow-rate ratio determination unit configured to determine the flow-rate ratio of each of the at least two flow paths;
the temperature prediction unit is configured to:
predict, when change of the flow-rate ratio of each of the at least two flow paths is determined, a heat exchange amount (Q1) between the first heat exchanger and the first heat transfer medium based on (i) the flow-rate ratio of each of the at least two flow paths and (ii) a value of the temperature of the first heat transfer medium in each of the at least two flow paths; and
input the predicted heat exchange amount into a temperature prediction model to thereby calculate the predicted temperature or the predicted temperature change rate of the first heat transfer medium flowing into the inlet of the first heat exchanger;
the flow path control unit is configured to control the flow-rate adjustment valve to change the flow-path ratio of each of the at least two flow paths when the predicted temperature or the predicted temperature change rate is determined to be within the corresponding predetermined range; and
the flow-path ratio determination unit is configured to redetermine, when the predicted temperature or the predicted temperature change rate is determined not to be within the corresponding predetermined range, the flow-rate ratio until the predicted temperature or the predicted temperature change rate is determined to be within the corresponding predetermined range.

10. The temperature control apparatus according to any one of claims 1 to 4, further comprising:
a state prediction unit configured to predict, when the change of the flow path of the first heat transfer medium is determined, a state of the second heat transfer medium based on the predicted temperature or the temperature change rate of the first heat transfer medium predicted by the temperature prediction unit; and
a determination unit (143) configured to determine whether to permit the change of the flow path of the first heat transfer medium based on the state of the second heat transfer medium predicted by the state prediction unit.

11. The temperature control apparatus according to claim 10, wherein:
the state prediction unit is configured to input, into a state prediction model for predicting the state of the second heat transfer medium, (i) the predicted temperature or the temperature change rate of the first heat transfer medium, (ii) a value of the temperature of the second heat transfer medium before the flow-path change, and (iii) a pressure control variable instructing an operation of the pressure converter to thereby predict the state of the second heat transfer medium.

12. A temperature control program executable by a temperature control apparatus for a temperature adjustment system (100) that includes:
a first circulation circuit (11) through which a first heat transfer medium circulates, the first circulation circuit being configured such that a flow path of the first heat transfer medium is changeable; and
a heat pump (130) configured to circulate a second heat transfer medium between a first heat exchanger (31) and a second heat exchanger (32), the heat pump comprising a pressure converter (33, 34) configured to compress or expand the second heat transfer medium during circulation of the second heat transfer medium to change a temperature of the second heat transfer medium,
the first heat transfer medium flowing from the first circulation circuit into the first heat exchanger exchanging heat with the second heat transfer medium, so that a temperature of the first heat transfer medium is adjusted,
the temperature control program causing the temperature control apparatus to:
calculate, when change of the flow path of the first heat transfer medium is determined, a predicted temperature or a predicted temperature change rate of the first heat transfer medium flowing into the first heat exchanger; and
control, based on the predicted temperature or the predicted temperature change rate of the first heat transfer medium, the change of the flow path of the first heat transfer medium.

13. A temperature control method for a temperature adjustment system (100) that includes:
a first circulation circuit (11) through which a first heat transfer medium circulates, the first circulation circuit being configured such that a flow path of the first heat transfer medium is changeable; and
a heat pump (130) configured to circulate a second heat transfer medium between a first heat exchanger (31) and a second heat exchanger (32), the heat pump comprising a pressure converter (33, 34) configured to compress or expand the second heat transfer medium during circulation of the second heat transfer medium to change a temperature of the second heat transfer medium,
the first heat transfer medium flowing from the first circulation circuit into the first heat exchanger exchanging heat with the second heat transfer medium, so that a temperature of the first heat transfer medium is adjusted,
the temperature control method comprising:
calculating, when change of the flow path of the first heat transfer medium is determined, a predicted temperature or a predicted temperature change rate of the first heat transfer medium flowing into the first heat exchanger; and
controlling, based on the predicted temperature or the predicted temperature change rate of the first heat transfer medium, the change of the flow path of the first heat transfer medium.
